# EUROPEAN PATENT APPLICATION

(11) **EP 4 530 819 A1**
(43) Date of publication of application: **02.04.2025**
(21) Application number: 22961079.5
(22) Date of filing: 29.09.2022
(51) Int. Cl.: G06F 3/14, G06F 9/455

(54) **SIGNAL PROCESSING DEVICE, AND DISPLAY DEVICE FOR VEHICLE HAVING SAME**

(71) Applicant: LG Electronics Inc., Yeongdeungpo-gu Seoul 07336 (KR)
(72) Inventor: OH, Soohwan, Seoul 06772 (KR); SHIN, Kyungjun, Seoul 06772 (KR); JEONG, Sangkyeong, Seoul 06772 (KR); YU, Ganghee, Seoul 06772 (KR); LEE, Jaeung, Seoul 06772 (KR)
(74) Representative: Vossius & Partner Patentanwälte Rechtsanwälte mbB
(86) International application number: PCT/KR2022/014643
(87) International publication number: WO 2024/071476

(57) **Abstract**

A signal processing device and a display apparatus for vehicles including the same are disclosed. The signal processing device comprises a processor configured to perform signal processing for a plurality of displays mounted in a vehicle, wherein, in response to execution of an application, the processor is configured to transmit a request to execute the application to a cartridge device, receive a cartridge image of the application executed in the cartridge device, and display the received cartridge image on at least one of the plurality of displays. Accordingly, the cartridge image of the application executed in the cartridge device may be provided.

## Description

### BACKGROUND

### 1. Field

The present disclosure relates to a signal processing device and a display apparatus for vehicles including the same, and more particularly to a signal processing device capable of providing a cartridge image of an application executed on a cartridge device and a display apparatus for vehicles including the same.

### 2. Description of the Related Art

A vehicle is an apparatus that a driver moves in a desired direction. A representative example of the vehicle is a car.

Meanwhile, a display apparatus for vehicles is mounted in the vehicle for convenience of users who use the vehicle.

For example, a display is disposed in a cluster to display various kinds of information. Meanwhile, to display vehicle driving information, various displays, such as an audio video navigation (AVN) display, are mounted in the vehicle, in addition to the cluster.

As such, when a plurality of displays is controlled by a signal processing device, there is a limitation for displaying an application image depending on the execution of an application.

For example, if an application desired by a user is not installed on the signal processing device, it is not possible to execute the application.

### SUMMARY

An object of the present disclosure is to provide a signal processing device capable of providing a cartridge image of an application executed on a cartridge device and a display apparatus for vehicles including the same.

Another object of the present disclosure is to provide a signal processing device capable of providing a high-resolution cartridge image and a display apparatus for vehicles including the same.

In accordance with an aspect of the present disclosure, the above and other objects can be accomplished by the provision of a signal processing device including a processor configured to perform signal processing for a plurality of displays mounted in a vehicle, wherein, in response to execution of an application, the processor is configured to transmit a request to execute the application to a cartridge device, receive a cartridge image of the application executed in the cartridge device, and display the received cartridge image on at least one of the plurality of displays.

The processor may be configured to transmit information of at least one display to display the cartridge image and resolution information to the cartridge device.

In response to displaying the cartridge image on a second display among the plurality of displays, the processor may be configured to transmit information of the second display and resolution information to the cartridge device.

In response to displaying the cartridge image on the second display among the plurality of displays, the processor may be configured to superimpose a cartridge image layer corresponding to the cartridge image and a display image layer corresponding to the display image, and display the cartridge image and the display image together.

The processor may be configured to execute a cartridge client configured to exchange data with the cartridge device and a display manager to manage the plurality of displays.

The processor may comprise an application processor configured to transmit a cartridge control command to the cartridge client.

The processor may be configured to execute a server virtual machine and a plurality of guest virtual machines on a hypervisor, and the plurality of guest virtual machines may be operated for the plurality of displays.

In response to touch input from the second display among the plurality of displays, a second guest virtual machine, among the plurality of guest virtual machines, may be configured to execute the application, the server virtual machine may be configured to transmit a request to execute the application to the cartridge device, and the second guest virtual machine may be configured to receive the cartridge image of the application executed in the cartridge device and display the received cartridge image on the second display.

The server virtual machine may be configured to transmit information of the second display and resolution information to the cartridge device.

The server virtual machine may be configured to connect the second guest virtual machine and the cartridge device to each other.

The server virtual machine may be configured to transmit size information and position information of a cartridge image layer corresponding to the cartridge image to the second guest virtual machine.

At least some of the plurality of guest virtual machines may be configured to receive the cartridge image of the application executed in the cartridge device and display the received cartridge image on at least one display.

The processor may be configured to store the cartridge image from the cartridge device in a shared memory, and at least some of the plurality of guest virtual machines may be configured to receive the cartridge image stored in the shared memory and display the received cartridge image on at least one display.

The processor may be configured to receive the cartridge image from the cartridge device and may be configured to display a part of the cartridge image on a first display among the plurality of displays, and display another part of the cartridge image on the second display among the plurality of displays.

The processor may be configured to receive the cartridge image from the cartridge device and may be configured to display a cartridge image of a first size on the first display and display a cartridge image of a second size different from the first size on the second display.

The processor may be configured to receive a plurality of cartridge images from the cartridge device and may be configured to display the respective cartridge image on the plurality of displays.

The processor may be configured to receive a plurality of cartridge images from the cartridge device and may be configured to display the plurality of cartridge images together on at least some of the plurality of displays.

In accordance with another aspect of the present disclosure, there is provided a display apparatus for vehicles, the display apparatus including a signal processing device and a cartridge device, wherein the cartridge device comprises a cartridge server configured to exchange data with the signal processing device and a virtual display generator for a virtual display.

### EFFECTS OF THE DISCLOSURE

A signal processing device according to an embodiment of the present disclosure comprises a processor configured to perform signal processing for a plurality of displays mounted in a vehicle, wherein, in response to execution of an application, the processor is configured to transmit a request to execute the application to a cartridge device, receive a cartridge image of the application executed in the cartridge device, and display the received cartridge image on at least one of the plurality of displays. Accordingly, the cartridge image of the application executed in the cartridge device may be provided. In particular, a high-resolution cartridge image may be provided.

The processor may be configured to transmit information of at least one display to display the cartridge image and resolution information to the cartridge device. Accordingly, the cartridge image of the application executed in the cartridge device may be provided.

In response to displaying the cartridge image on a second display among the plurality of displays, the processor may be configured to transmit information of the second display and resolution information to the cartridge device. Accordingly, the cartridge image of the application executed in the cartridge device may be provided.

In response to displaying the cartridge image on the second display among the plurality of displays, the processor may be configured to superimpose a cartridge image layer corresponding to the cartridge image and a display image layer corresponding to the display image, and display the cartridge image and the display image together. Accordingly, the cartridge image of the application executed in the cartridge device may be provided.

The processor may be configured to execute a cartridge client configured to exchange data with the cartridge device and a display manager to manage the plurality of displays. Accordingly, the cartridge image of the application executed in the cartridge device may be provided.

The processor may comprise an application processor configured to transmit a cartridge control command to the cartridge client. Accordingly, the cartridge image of the application executed in the cartridge device may be provided.

The processor may be configured to execute a server virtual machine and a plurality of guest virtual machines on a hypervisor, and the plurality of guest virtual machines may be operated for the plurality of displays. Accordingly, the cartridge image of the application executed in the cartridge device may be provided.

In response to touch input from the second display among the plurality of displays, a second guest virtual machine, among the plurality of guest virtual machines, may be configured to execute the application, the server virtual machine may be configured to transmit a request to execute the application to the cartridge device, and the second guest virtual machine may be configured to receive the cartridge image of the application executed in the cartridge device and display the received cartridge image on the second display. Accordingly, the cartridge image of the application executed in the cartridge device may be provided.

The server virtual machine may be configured to transmit information of the second display and resolution information to the cartridge device. Accordingly, the cartridge image of the application executed in the cartridge device may be provided.

The server virtual machine may be configured to connect the second guest virtual machine and the cartridge device to each other.

The server virtual machine may be configured to transmit size information and position information of a cartridge image layer corresponding to the cartridge image to the second guest virtual machine. Accordingly, the cartridge image of the application executed in the cartridge device may be provided.

At least some of the plurality of guest virtual machines may be configured to receive the cartridge image of the application executed in the cartridge device and display the received cartridge image on at least one display. Accordingly, the cartridge image of the application executed in the cartridge device may be provided.

The processor may be configured to store the cartridge image from the cartridge device in a shared memory, and at least some of the plurality of guest virtual machines may be configured to receive the cartridge image stored in the shared memory and display the received cartridge image on at least one display. Accordingly, the cartridge image of the application executed in the cartridge device may be provided.

The processor may be configured to receive the cartridge image from the cartridge device and may be configured to display a part of the cartridge image on a first display among the plurality of displays, and display another part of the cartridge image on the second display among the plurality of displays. Accordingly, the cartridge image of the application executed in the cartridge device may be provided.

The processor may be configured to receive the cartridge image from the cartridge device and may be configured to display a cartridge image of a first size on the first display and display a cartridge image of a second size different from the first size on the second display. Accordingly, the cartridge image of the application executed in the cartridge device may be provided.

The processor may be configured to receive a plurality of cartridge images from the cartridge device and may be configured to display the respective cartridge image on the plurality of displays. Accordingly, the cartridge image of the application executed in the cartridge device may be provided.

The processor may be configured to receive a plurality of cartridge images from the cartridge device and may be configured to display the plurality of cartridge images together on at least some of the plurality of displays. Accordingly, the cartridge image of the application executed in the cartridge device may be provided.

A display apparatus for vehicles according to an embodiment of the present disclosure comprises a signal processing device and a cartridge device, wherein the cartridge device comprises a cartridge server configured to exchange data with the signal processing device and a virtual display generator for a virtual display. Accordingly, a cartridge image of an application executed in the cartridge device may be provided.

### BRIEF DESCRIPTION OF THE DRAWINGS

FIG. 1A is a view showing an example of the exterior and interior of a vehicle;
FIG. 1B is a view showing another example of the interior of the vehicle;
FIG. 2 is a view showing the external appearance of a display apparatus for vehicles according to an embodiment of the present disclosure;
FIG. 3 illustrates an example of an internal block diagram of the display apparatus for vehicles of FIG. 2;
FIG. 4 is a view showing a system driven in a signal processing device related to the present disclosure;
FIG. 5 is a view showing an example of a system driven in a signal processing device according to the present disclosure;
FIG. 6 is a view showing another example of the system driven in the signal processing device according to the present disclosure;
FIG. 7 is a view showing a further example of the system driven in the signal processing device according to the present disclosure;
FIGs. 8 to 9B are views referred to in the description of FIG. 5;
FIG. 10 is a view showing an example of a system driven in a signal processing device according to an embodiment of the present disclosure;
FIG. 11 shows an example of a block diagram of a display apparatus for vehicles according to an embodiment of the present disclosure; and
FIGs. 12 to 24 are views referred to in the description of FIG. 11.

### DETAILED DESCRIPTION

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" may be used interchangeably.

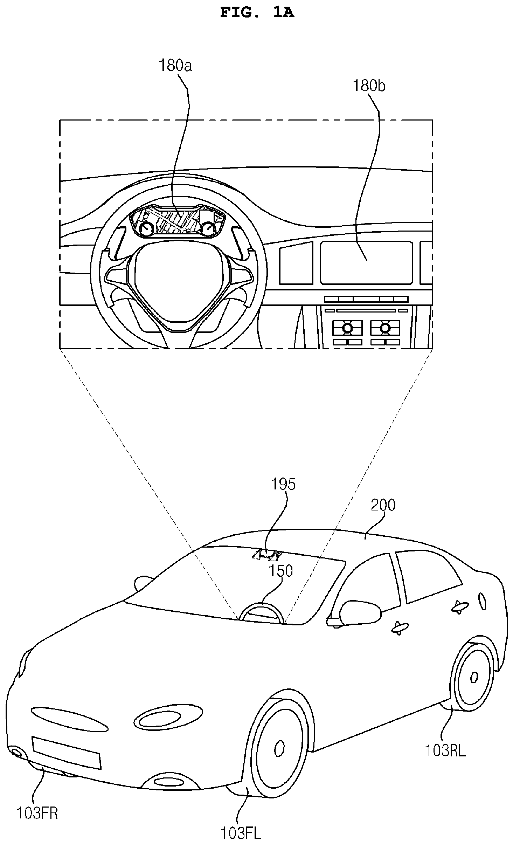

FIG. 1A is a view showing an example of the exterior and interior of a vehicle.

Referring to the figure, the vehicle 200 is moved by a plurality of wheels 103FR, 103FL, 103RL, ... rotated by a power source and a steering wheel 150 configured to adjust an advancing direction of the vehicle 200.

Meanwhile, the vehicle 200 may be provided with a camera 195 configured to acquire an image of the front of the vehicle.

Meanwhile, the vehicle 200 may be further provided therein with a plurality of displays 180a and 180b configured to display images and information.

In FIG. 1A, a cluster display 180a and an audio video navigation (AVN) display 180b are illustrated as the plurality of displays 180a and 180b. In addition, a head up display (HUD) may also be used.

Meanwhile, the audio video navigation (AVN) display 180b may also be called a center information display.

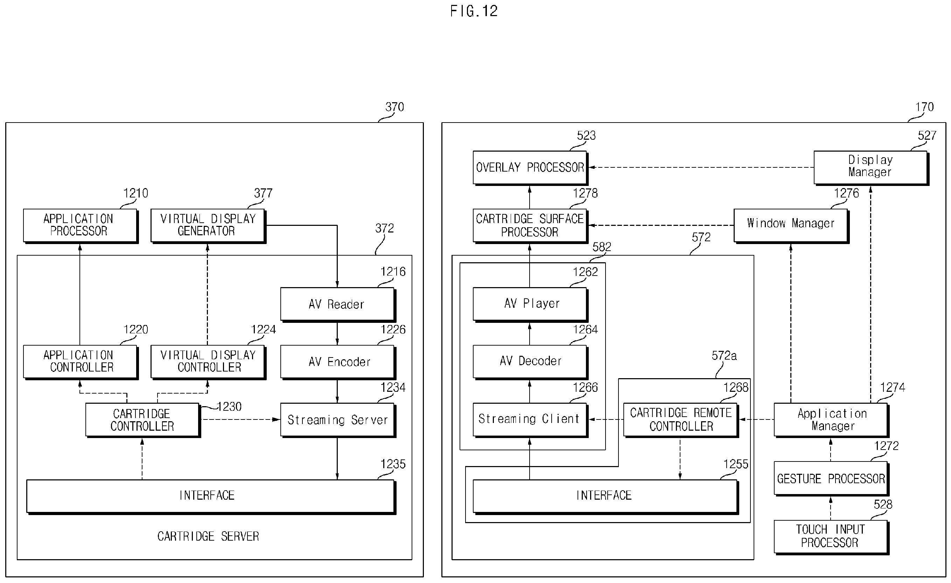

The embodiment of the present disclosure proposes a scheme for a display apparatus 100 for vehicles including a plurality of displays 180a and 180b to efficiently utilize resources. This will be described with reference to FIG. 12 and subsequent figures.

Meanwhile, the vehicle 200 described in this specification may be a concept including all of a vehicle having an engine as a power source, a hybrid vehicle having an engine and an electric motor as a power source, and an electric vehicle having an electric motor as a power source.

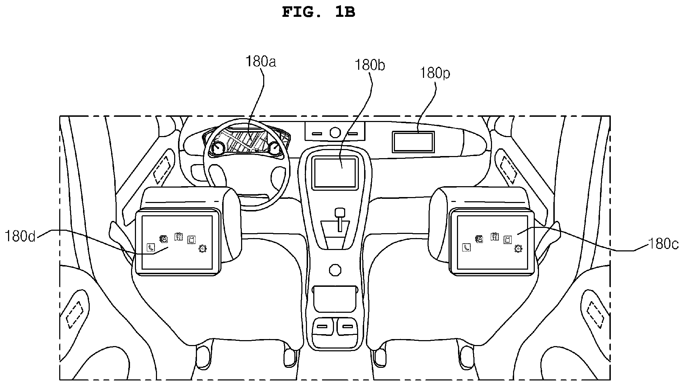

FIG. 1B is a view showing another example of the interior of the vehicle.

Referring to the figure, a cluster display 180a, an audio video navigation (AVN) display 180b, a co-driver display 180P, rear seat entertainment (RSE) displays 180c and 180d, and a rear-view mirror display (not shown) may be mounted in the vehicle.

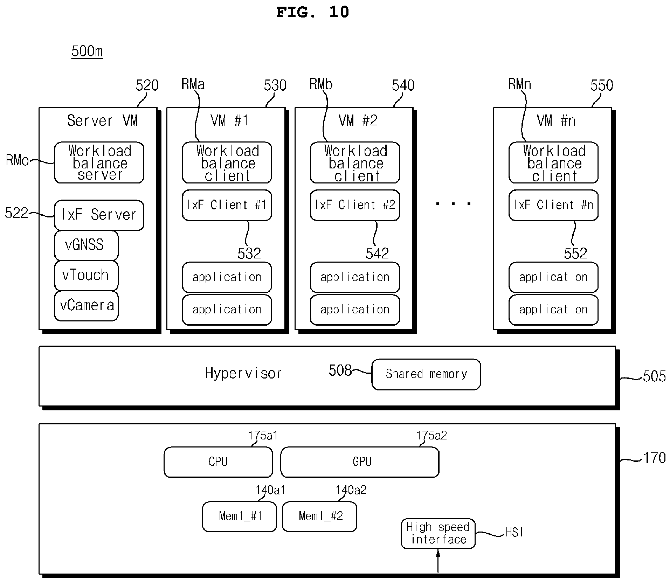

The embodiment of the present disclosure proposes a scheme for a display apparatus 100 for vehicles including a plurality of displays 180a to 180d to efficiently utilize resources of a plurality of virtual machines. This will be described with reference to FIG. 10 and subsequent figures.

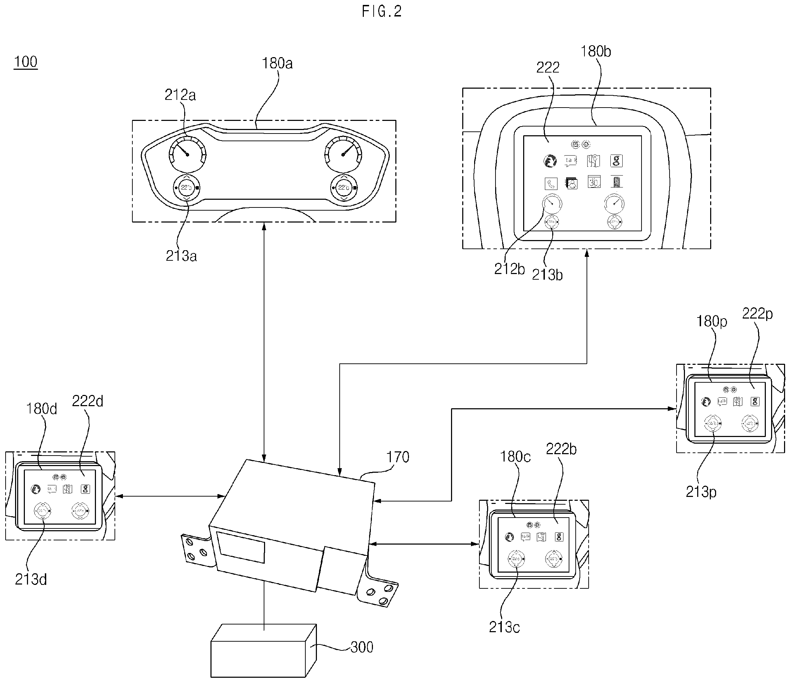

FIG. 2 is a view showing the external appearance of a display apparatus for vehicles according to an embodiment of the present disclosure.

The display apparatus 100 for vehicles according to the embodiment of the present disclosure may comprise a plurality of displays 180a to 180d and 180p, a signal processing device 170 configured to perform signal processing to display images and information on the plurality of displays 180a to 180d and 180p, and a cartridge device 300 configured to exchange data with the signal processing device 170.

The first display 180a, which is one of the plurality of displays 180a to 180d and 180p, may be a cluster display 180a configured to display a driving state and operation information, and the second display 180b may be an audio video navigation (AVN) display 180b configured to display vehicle driving information, a navigation map, various kinds of entertainment information, or an image.

The third display 180p, which is one of the plurality of displays 180a to 180d and 180p, may be a co-driver display (CDD) 180p configured to display vehicle driving information, a navigation map, various kinds of entertainment information, or an image, and the fourth display 180c and the fifth display 180d may be rear seat entertainment (RSE) displays 180c and 108d configured to display driving status information, simple navigation information, various kinds of entertainment information, or an image.

The signal processing device 170 may have a processor 175 provided therein, and a plurality of virtual machines 520 to 550 may be executed on a hypervisor 505 in the processor 175.

For example, the plurality of virtual machines 520 to 550 may be first to fourth virtual machines 520 to 550.

The first virtual machine 520, which is a server virtual machine, may control the second to fourth virtual machines 530 to 550, which are guest virtual machines.

The second virtual machine 530, which is a first guest virtual machine, may be operated for the first display 180a, the third virtual machine 540, which is a second guest virtual machine, may be operated for the second display 180b, and the fourth virtual machine 550, which is a third guest virtual machine, may be operated for the third display 180p.

Meanwhile, the first virtual machine 520 in the processor 175 may be configured to set a shared memory 508 based on the hypervisor 505 for transmission of the same data to the second virtual machine 530 and the third virtual machine 540. Consequently, the first display 180a and the second display 180b in the vehicle may be configured to display the same information or the same images in a synchronized state.

Meanwhile, the first virtual machine 520 in the processor 175 shares at least some of data with the second virtual machine 530 and the third virtual machine 540 for divided processing of data. Consequently, the plurality of virtual machines for the plurality of displays in the vehicle may divide and process data.

Meanwhile, the first virtual machine 520 in the processor 175 may be configured to receive and process wheel speed sensor data of the vehicle, and may be configured to transmit the processed wheel speed sensor data to at least one of the second virtual machine 530 or the third virtual machine 540. Consequently, at least one virtual machine may share the wheel speed sensor data of the vehicle.

The signal processing device 170 may further execute a fifth virtual machine or a sixth virtual machine (not shown), which is a guest virtual machine, in addition to the first to fourth virtual machines 520 to 550, on the hypervisor 505 in the processor 175 to control the RSE displays 180c and 180d.

Consequently, it is possible to control various displays 180a, 180d, 180p using a single signal processing device 170.

Meanwhile, some of the plurality of displays 180a, 180d, 180p may be operated based on a Linux Operating System (OS), and others may be operated based on a Web Operating System (OS).

In response to touch input to any one of the displays 180a to 180d and 180p configured to be operated under various operating systems, the signal processing device 170 according to the embodiment of the present disclosure may be configured to rapidly and accurately process the touch input.

Meanwhile, FIG. 2 illustrates that a vehicle speed indicator 212a and an in-vehicle temperature indicator 213a are displayed on the first display 180a, a home screen 222 including a plurality of applications, a vehicle speed indicator 212b, and an in-vehicle temperature indicator 213b is displayed on the second display 180b, a second home screen 222p including a plurality of applications and an in-vehicle temperature indicator 213p is displayed on the third display 180p, a third home screen 222b including a plurality of applications and an in-vehicle temperature indicator 213c is displayed on the fourth display 180c, and a fourth home screen 222d including a plurality of applications and an in-vehicle temperature indicator 213d is displayed on the fifth display 180d.

Meanwhile, the cartridge device 300, which is a removable device, may be a device that is more amenable to firmware updates or software updates than the signal processing device 170.

For example, it is preferable for the version of the firmware of the cartridge device 300 to be more recent than the version of the firmware of the signal processing device 170.

As another example, it is preferable for the version of software, such as an application installed in the cartridge device 300, to be more recent than the version of software, such as an application installed in the signal processing device 170.

Accordingly, in the present disclosure, when executing an application in the signal processing device 170, if the same application is installed in the cartridge device 300, the cartridge device 300 may be configured to execute and generate the application, and transmit a cartridge image corresponding to the application to the signal processing device 170.

Accordingly, the signal processing device 170 may be configured to receive the cartridge image and display the cartridge image. Accordingly, a high-resolution cartridge image may be displayed.

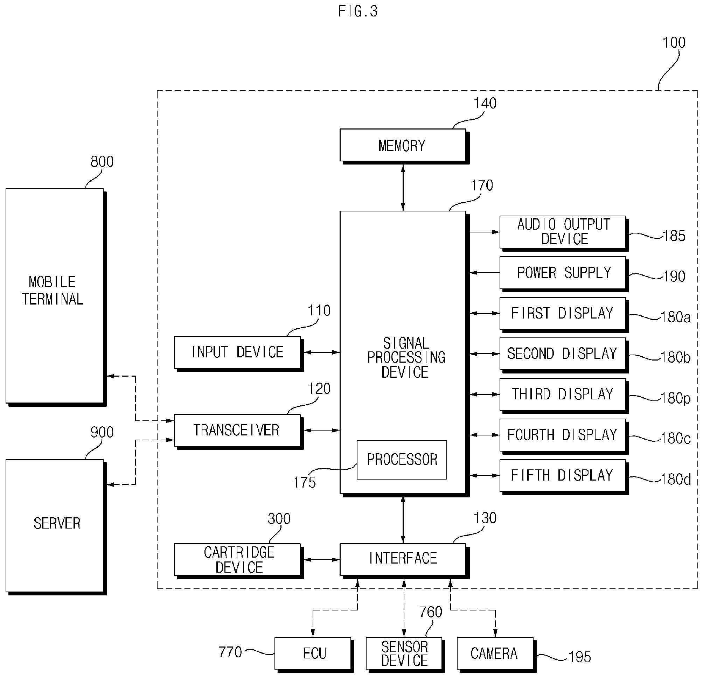

FIG. 3 illustrates an example of an internal block diagram of the display apparatus for vehicles according to the embodiment of the present disclosure.

Referring to the figure, the display apparatus 100 for vehicles according to the embodiment of the present disclosure may comprise an input device 110, a transceiver 120, an interface 130, a memory 140, a signal processing device 170, a plurality of displays 180a, 180d, 180p, an audio output device 185, a power supply 190, and a cartridge device 300.

The input device 110 may comprise a physical button or pad for button input or touch input.

Meanwhile, the input device 110 may comprise a touch sensor (not shown) configured to sense touch input to the displays 180a, 180b, and 180c.

Meanwhile, the input device 110 may comprise a microphone (not shown) for user voice input.

The transceiver 120 may wirelessly exchange data with a mobile terminal 800 or a server 900.

In particular, the transceiver 120 may wirelessly exchange data with a mobile terminal of a vehicle driver. Any of various data communication schemes, such as Bluetooth, Wi-Fi, Wi-Fi Direct, and APIX, may be used as a wireless data communication scheme.

The transceiver 120 may be configured to receive weather information and road traffic situation information, such as transport protocol expert group (TPEG) information, from the mobile terminal 800 or the server 900. To this end, the transceiver 120 may comprise a mobile communication module (not shown).

The interface 130 may be configured to receive sensor information from an electronic controller (ECU) 770 or a sensor device 760, and may be configured to transmit the received information to the signal processing device 170.

Here, the sensor information may comprise at least one of vehicle direction information, vehicle position information (global positioning system (GPS) information), vehicle angle information, vehicle velocity information, vehicle acceleration information, vehicle inclination information, vehicle forward/backward movement information, battery information, fuel information, tire information, vehicle lamp information, in-vehicle temperature information, and in-vehicle humidity information.

The sensor information may be acquired from a heading sensor, a yaw sensor, a gyro sensor, a position sensor, a vehicle forward/backward movement sensor, a wheel sensor, a vehicle velocity sensor, a car body inclination sensor, a battery sensor, a fuel sensor, a tire sensor, a steering-wheel-rotation-based steering sensor, an in-vehicle temperature sensor, or an in-vehicle humidity sensor. Meanwhile, the position module may comprise a GPS module configured to receive GPS information.

Meanwhile, the interface 130 may be configured to receive front-of-vehicle image data, side-of-vehicle image data, rear-of-vehicle image data, and obstacle-around-vehicle distance information from a camera 195 or lidar (not shown), and may be configured to transmit the received information to the signal processing device 170.

The memory 140 may store various data necessary for overall operation of the display apparatus 100 for vehicle, such as programs for processing or control of the signal processing device 170.

For example, the memory 140 may store data about the hypervisor and first to third virtual machines executed by the hypervisor in the processor 175.

The audio output device 185 may convert an electrical signal from the signal processing device 170 into an audio signal, and may output the audio signal. To this end, the audio output device 185 may comprise a speaker.

The power supply 190 may supply power necessary to operate components under control of the signal processing device 170. In particular, the power supply 190 may be configured to receive power from a battery in the vehicle.

The signal processing device 170 may control overall operation of each device in the display apparatus 100 for vehicle.

For example, the signal processing device 170 may comprise a processor 175 configured to perform signal processing for the displays 180a and 180b.

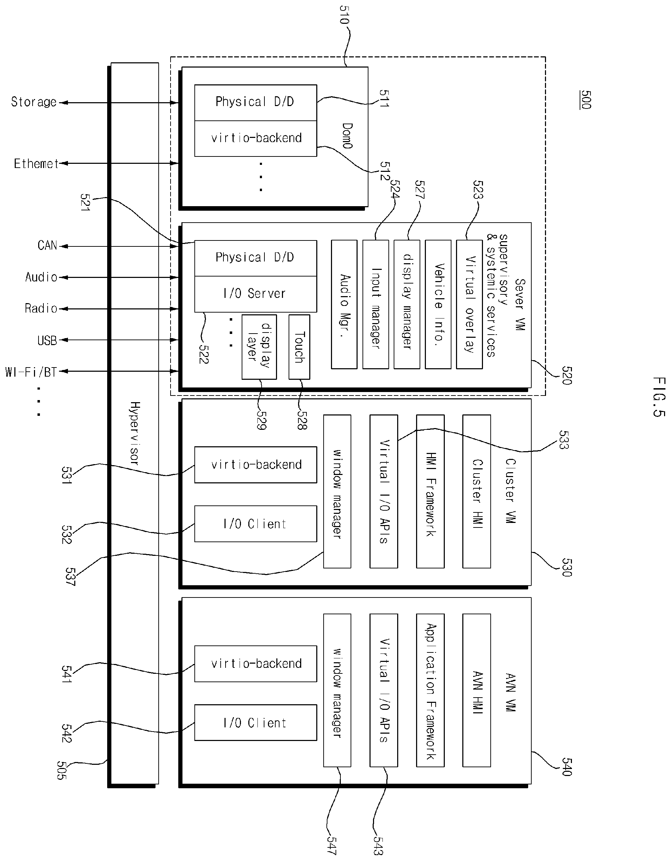

The processor 175 may be configured to execute the first to third virtual machines 520 to 540 on the hypervisor 505 (see FIG. 5) in the processor 175.

Meanwhile, the processor 175 may further execute a legacy virtual machine configured to receive and process Ethernet data. For example, as shown in FIG. 5, the legacy virtual machine may be executed by the first virtual machine 520 in the processor 175.

Among the first to third virtual machines 520 to 540 (see FIG. 5), the first virtual machine 520 may be called a server virtual machine, and the second and third virtual machines 530 and 540 may be called guest virtual machines.

The second virtual machine 530 may be operated for the first display 180a, and the third virtual machine 540 may be operated for the second display 180b.

For example, the first virtual machine 520 in the processor 175 may be configured to receive, process, and output vehicle sensor data, position information data, camera image data, audio data, or touch input data. Data processed only by a legacy virtual machine and data processed by the first virtual machine 520 may be distinguished from each other, whereby data processing may be efficiently performed. In particular, the first virtual machine 520 may process most of the data, whereby 1:N data sharing may be achieved.

As another example, the first virtual machine 520 may directly receive and process CAN communication data, audio data, radio data, USB data, and wireless communication data for the second and third virtual machines 530 and 540.

The first virtual machine 520 may be configured to transmit the processed data to the second and third virtual machines 530 and 540.

Consequently, only the first virtual machine 520, among the first to third virtual machines 520 to 540, may be configured to receive communication data and external input data, and may perform signal processing, whereby load in signal processing by the other virtual machines may be reduced and 1:N data communication may be achieved, and therefore synchronization at the time of data sharing may be achieved.

Meanwhile, the first virtual machine 520 writes some of data in a first shared memory (not shown) to be transmitted to the second virtual machine 530, and writes some other of data in the first shared memory (not shown) to be transmitted to the third virtual machine 540. The second virtual machine 530 and the third virtual machine 540 are configured to process the received data, and write the processed data in a second shared memory (not shown). Accordingly, it is possible to provide a cartridge image of an application executed in the cartridge device.

At this time, data may be any one of image data, audio data, navigation data, and voice recognition data.

Meanwhile, the first virtual machine 520 may process some other of data, and may be configured to write the processed data in the second shared memory (not shown). That is, the first virtual machine 520 may perform data processing in addition to the second virtual machine 530 and the third virtual machine 540.

Meanwhile, in response to the fourth virtual machine 550 configured to be operated for the fourth display 180c being executed in the processor 175, the first virtual machine 520 may be configured to write some other of data in the first shared memory (not shown), and the fourth virtual machine 550 may be configured to process the received data and write the processed data in the second shared memory (not shown).

Meanwhile, the first virtual machine 520 may be configured to generate command queues for distributed processing of data in the second virtual machine 530 and the third virtual machine 540. Consequently, the plurality of virtual machines may divide and process data.

Meanwhile, in response to the second virtual machine 530 and the third virtual machine 540 sharing the same data, the first virtual machine 520 in the processor 175 may be configured to generate one command queue. Consequently, the same data may be synchronized and shared.

Meanwhile, the first virtual machine 520 may be configured to generate command queues corresponding to the number of virtual machines for distributed processing of data.

Meanwhile, the first virtual machine 520 may be configured to transmit at least some of data to at least one of the second virtual machine 530 or the third virtual machine 540 for distributed processing of data.

For example, the first virtual machine 520 may be configured to allocate the first shared memory (not shown) for transmitting at least some of data to at least one of the second virtual machine 530 or the third virtual machine 540, and image data processed by the second virtual machine 530 or the third virtual machine 540 may be written in the second shared memory (not shown).

Meanwhile, the first virtual machine 520 may be configured to write data in the shared memory 508, whereby the second virtual machine 530 and the third virtual machine 540 share the same data.

For example, the first virtual machine 520 may be configured to write radio data or wireless communication data in the shared memory 508, whereby the second virtual machine 530 and the third virtual machine 540 share the same data. Consequently, 1:N data sharing may be achieved.

Eventually, the first virtual machine 520 may process most of the data, whereby 1:N data sharing may be achieved.

Meanwhile, the first virtual machine 520 in the processor 175 may be configured to set the shared memory 508 based on the hypervisor 505 to transmit the same data to the second virtual machine 530 and the third virtual machine 540.

That is, the first virtual machine 520 in the processor 175 may be configured to transmit the same data to the second virtual machine 530 and the third virtual machine 540 in a synchronized state using the shared memory 508 based on the hypervisor 505. Consequently, the plurality of displays 180a and 180b in the vehicle may be configured to display the same images in a synchronized state.

Meanwhile, the signal processing device 170 may process various signals, such as an audio signal, an image signal, and a data signal. To this end, the signal processing device 170 may be implemented in the form of a system on chip (SOC).

Meanwhile, the signal processing device 170 may be configured to receive a list of applications installed in the cartridge device 300 when the cartridge device 300 is connected in a wired or wireless fashion.

When a first application is selected from the list of applications installed in the cartridge device 300, the signal processing device 170 may be configured to transmit an execution request of the first application to the cartridge device 300, and may be configured to receive a cartridge image corresponding to the first application from the cartridge device 300.

Meanwhile, the signal processing device 170 may be configured to execute the application based on application execution input.

Meanwhile, upon executing the selected application, the signal processing device 170 may check whether the same application is installed in the cartridge device 300 and, if the same application is installed, check the version of the application.

If the version of the application installed in the cartridge device 300 is newer than the version of the application installed in the signal processing device 170, the signal processing device 170 may be configured to execute the application in the cartridge device 300.

The signal processing device 170 may be configured to receive a cartridge image corresponding to the application from the cartridge device 300.

Accordingly, the signal processing device 170 may be configured to receive the cartridge image and may be configured to the cartridge image is displayed. Accordingly, a high-resolution cartridge image may be displayed.

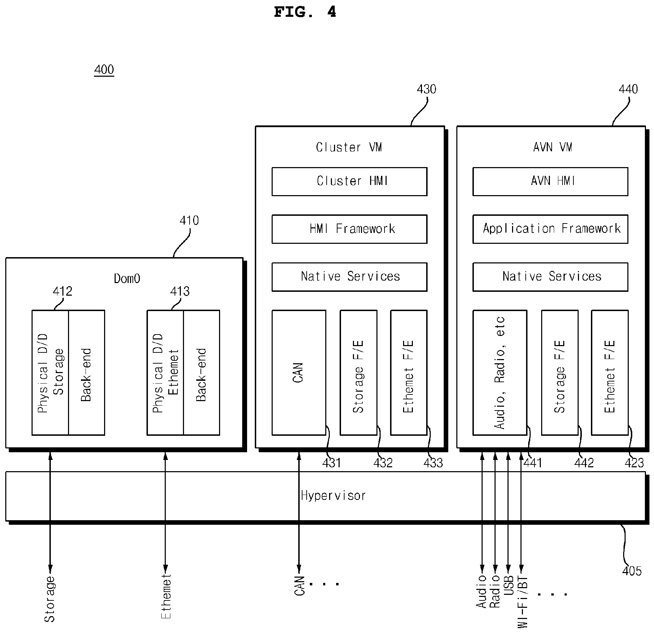

FIG. 4 is a view showing a system driven in a signal processing device related to the present disclosure.

Referring to the figure, FIG. 4 is a view illustrating that virtual machines are used for the cluster display 180a and the AVN display 180b.

The system 400 driven in the signal processing device of FIG. 4 illustrates that a cluster virtual machine 430 and an AVN virtual machine 440 are executed through a hypervisor 405 in the processor 175.

Meanwhile, the system 400 driven in the signal processing device of FIG. 4 illustrates that a legacy virtual machine 410 is also executed on the hypervisor 405 in the processor 175.

The legacy virtual machine 410 may comprise an interface 412 for data communication with the memory 140 and an interface 413 for Ethernet communication.

Meanwhile, the cluster virtual machine 430 may comprise an interface 431 for CAN communication, an interface 432 for communication with the interface 412 of the legacy virtual machine 410, and an interface 433 for communication with the interface 413 of the legacy virtual machine 410.

Meanwhile, the AVN virtual machine 440 may comprise an interface 441 for input and output of audio data, radio data, USB data, and wireless communication data, an interface 442 for communication with the interface 412 of the legacy virtual machine 410, and an interface 443 for communication with the interface 413 of the legacy virtual machine 410.

In the system 400, there is a disadvantage in that CAN communication data are input and output only in the cluster virtual machine 430, whereby the CAN communication data cannot be utilized in the AVN virtual machine 440.

Also, in the system 400 of FIG. 4, there is a disadvantage in that audio data, radio data, USB data, and wireless communication data are input and output only in the AVN virtual machine 440, whereby these data cannot be utilized in the cluster virtual machine 430.

Meanwhile, there is a disadvantage in that the cluster virtual machine 430 and the AVN virtual machine 440 must comprise the interfaces 431 and 432 and the interfaces 441 and 442, respectively, for memory data and Ethernet communication data input and output in the legacy virtual machine 410.

Therefore, the present disclosure proposes a scheme for improving the system of FIG. 4. That is, unlike FIG. 4, virtual machines are classified into a server virtual machine and guest virtual machines such that various memory data and communication data are input and output not in the guest virtual machines but in the server virtual machine. This will be described with reference to FIG. 5 and subsequent figures.

FIG. 5 is a view showing an example of a system driven in a signal processing device according to the present disclosure.

Referring to the figure, the system 500 of FIG. 5 illustrates that the first virtual machine 520, which is a server virtual machine, the second virtual machine 530, which is a guest virtual machine, and the third virtual machine 540, which is a guest virtual machine, are executed on the hypervisor 505 in the processor 175 of the signal processing device 170.

The second virtual machine 530 may be a virtual machine for the cluster display 180a, and the third virtual machine 540 may be a virtual machine for the AVN display 180b.

That is, the second virtual machine 530 and the third virtual machine 540 may be operated for image rendering of the cluster display 180a and the AVN display 180b, respectively.

Meanwhile, the system 50 driven in the signal processing device 170 of FIG. 5 illustrates that a legacy virtual machine 510 is also executed on the hypervisor 505 in the processor 175.

The legacy virtual machine 510 may comprise an interface 511 for data communication with the memory 140 and Ethernet communication.

The figure illustrates that the interface 511 is a physical device driver; however, various modifications are possible.

Meanwhile, the legacy virtual machine 510 may further comprise a virtio-backend interface 512 for data communication with the second and third virtual machines 530 and 540.

The first virtual machine 520 may comprise an interface 521 for input and output of audio data, radio data, USB data, and wireless communication data and an input and output server interface 522 for data communication with the guest virtual machines.

That is, the first virtual machine 520, which is a server virtual machine, may provide inputs/outputs (I/O) difficult to virtualize with standard virtualization technology (VirtIO) to a plurality of guest virtual machines, such as the second and third virtual machines 530 and 540.

Meanwhile, the first virtual machine 520, which is a server virtual machine, may control radio data and audio data at a supervisor level, and may provide the data to a plurality of guest virtual machines, such as the second and third virtual machines 530 and 540.

Meanwhile, the first virtual machine 520, which is a server virtual machine, may process vehicle data, sensor data, and surroundings-of-vehicle information, and may provide the processed data or information to a plurality of guest virtual machines, such as the second and third virtual machines 530 and 540.

Meanwhile, the first virtual machine 520 may provide supervisory services, such as processing of vehicle data and audio routing management.

Next, the second virtual machine 530 may comprise an input and output client interface 532 for data communication with the first virtual machine 520 and APIs 533 configured to control the input and output client interface 532.

In addition, the second virtual machine 530 may comprise a virtio-backend interface for data communication with the legacy virtual machine 510.

The second virtual machine 530 may be configured to receive memory data by communication with the memory 140 or Ethernet data by Ethernet communication from the virtio-backend interface 512 of the legacy virtual machine 510 through the virtio-backend interface.

Next, the third virtual machine 540 may comprise an input and output client interface 542 for data communication with the first virtual machine 520 and APIs 543 configured to control the input and output client interface 542.

In addition, the third virtual machine 540 may comprise a virtio-backend interface for data communication with the legacy virtual machine 510.

The third virtual machine 540 may be configured to receive memory data by communication with the memory 140 or Ethernet data by Ethernet communication from the virtio-backend interface 512 of the legacy virtual machine 510 through the virtio-backend interface.

Meanwhile, the legacy virtual machine 510 may be provided in the first virtual machine 520, unlike FIG. 5.

In the system 500, CAN communication data are input and output only in the first virtual machine 520, but may be provided to a plurality of guest virtual machines, such as the second and third virtual machines 530 and 540, through data processing in the first virtual machine 520. Consequently, 1:N data communication by processing of the first virtual machine 520 may be achieved.

Also, in the system 500 of FIG. 5, audio data, radio data, USB data, and wireless communication data are input and output only in the first virtual machine 520, but may be provided to a plurality of guest virtual machines, such as the second and third virtual machines 530 and 540, through data processing in the first virtual machine 520. Consequently, 1:N data communication by processing of the first virtual machine 520 may be achieved.

Also, in the system 500 of FIG. 5, touch input to the first display 180a or the second display 180b is input only to the first virtual machine 520 and is not input to the second virtual machine 530 and the third virtual machine 540. Information regarding the touch input is transmitted to the second virtual machine 530 or the third virtual machine 540.

Consequently, the touch input may be rapidly and accurately processed. In addition, the touch input may be rapidly and accurately processed even though the number of virtual machines that are driven is increased.

Meanwhile, in the system 500 of FIG. 5, the second and third virtual machines 530 and 540 may be operated based on different operating systems.

For example, the second virtual machine 530 may be operated based on a Linux OS, and the third virtual machine 540 may be operated based on a Web OS.

In the first virtual machine 520, the shared memory 508 based on the hypervisor 505 is set for data sharing, even though the second and third virtual machines 530 and 540 are operated based on different operating systems. Even though the second and third virtual machines 530 and 540 are operated based on different operating systems, therefore, the same data or the same images may be shared in a synchronized state. Eventually, the plurality of displays 180a and 180b may be configured to display the same data or the same images in a synchronized state.

Meanwhile, the first virtual machine 520 transmits information regarding the touch input to the second virtual machine 530 or the third virtual machine 540 even though the second and third virtual machines 530 and 540 are operated based on different operating systems. Consequently, the touch input may be rapidly and accurately processed even though the second and third virtual machines 530 and 540 are operated based on different operating systems (OS).

Meanwhile, the first virtual machine 520 may comprise a display manager 527 configured to control overlays displayed on the first display 180a and the second display 180b, a display layer server 529, and a virtual overlay generator 523 configured to generate a virtual overlay.

The display layer server 529 may be configured to receive a first overlay provided by the second virtual machine 530 and a second overlay provided by the third virtual machine 540.

Meanwhile, the display layer server 529 may be configured to transmit a virtual overlay generated by the virtual overlay generator 523 to at least one of the second virtual machine 530 or the third virtual machine 540.

Meanwhile, the display manager 527 in the first virtual machine 520 may be configured to receive the first overlay provided by the second virtual machine 530 and the second overlay provided by the third virtual machine 540 through the display layer server 529.

The display manager 527 in the first virtual machine 520 may be configured to transmit the virtual overlay, which is different from the first overlay or the second overlay, to at least one of the second virtual machine 530 or the third virtual machine 540 through the display layer server 529.

In response thereto, the second virtual machine 530 may be configured to combine and display he first overlay and the virtual overlay on the first display 180a.

In addition, the third virtual machine 540 may be configured to combine and display the second overlay and the virtual overlay on the second display 180b.

Meanwhile, the first virtual machine 520 may comprise an input manager 524 configured to receive an input signal from the outside. At this time, the input signal may be an input signal from a predetermined button (start button) in the vehicle, a touch input signal, or a voice input signal.

For example, the input manager 524 in the first virtual machine 520 may be configured to receive touch input from the first display 180a or the second display 180b.

Meanwhile, the first virtual machine 520 may comprise a touch server 528 configured to transmit information regarding the touch input related to the touch input from the first display 180a or the second display 180b to the second virtual machine 530 or the third virtual machine 540.

For example, when there is touch input corresponding to the first display 180a, the touch server 528 in the first virtual machine 520 may be configured to transmit information regarding the touch input to the second virtual machine 530.

Meanwhile, the touch server 528 in the first virtual machine 520 may be configured to receive the touch input from the first display 180a or the second display 180b.

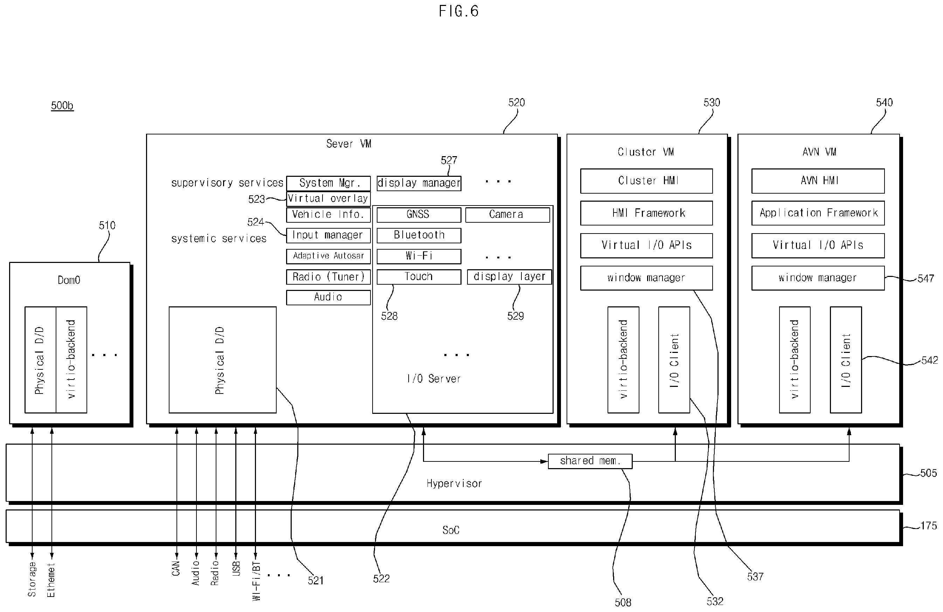

FIG. 6 is a view showing another example of the system driven in the signal processing device according to the present disclosure.

Referring to the figure, in the system 500b driven by the processor 175 in the signal processing device 170, the processor 175 in the signal processing device 170 executes the first to third virtual machines 520 to 540 on the hypervisor 505 in the processor 175, and the first virtual machine 520 in the processor 175 is configured to set the shared memory 508 based on the hypervisor 505 for transmission of data to the second and third virtual machines 530 and 540.

For example, information regarding touch input may be illustrated as the data. Consequently, the information regarding touch input may be transmitted to the second virtual machine 530 or the third virtual machine 540. Eventually, the touch input to the first display 180a or the second display 180b may be rapidly and accurately processed. In addition, the touch input may be rapidly and accurately processed even though the number of virtual machines that are driven is increased.

As another example, image data may be illustrated as the data. Consequently, an image may be displayed on the first display 180a or the second display 180b.

Meanwhile, in response to the same image data being shared in the shared memory 508, the plurality of displays 180a and 180b in the vehicle may be configured to display the same data in a synchronized state.

As another example, CAN communication data, audio data, radio data, USB data, wireless communication data, or position information data may be illustrated as the data. Consequently, information regarding the data may be displayed on the first display 180a or the second display 180b.

Meanwhile, although not shown in FIG. 6, the legacy virtual machine 510 may be configured to transmit memory data from the memory 140 or Ethernet data by Ethernet communication to the second and third virtual machines 530 and 540 using the shared memory 508 based on the hypervisor 505. Consequently, information corresponding to the memory data or the Ethernet data may be displayed on the first display 180a or the second display 180b.

Meanwhile, the first virtual machine 520 in the system 500b of FIG. 6 may comprise a display manager 527, a display layer server 529, a virtual overlay generator 523, an input manager 524, and a touch server 528, similarly to the first virtual machine 520 in the system 500 of FIG. 5.

Meanwhile, the input and output server interface 522 in the first virtual machine 520 in the system 500b of FIG. 6 may comprise a display layer server 529 and a touch server 528, unlike FIG. 5.

The operation of the display manager 527, the display layer server 529, the input manager 524, the virtual overlay generator 523, and the touch server 528 is the same to FIG. 5, and therefore a description thereof will be omitted.

Meanwhile, the first virtual machine 520 of FIG. 6 may further comprise a system manager for overall system control, a vehicle information manager for vehicles information management, an audio manager for audio control, and a radio manager for radio control.

Meanwhile, the input and output server interface 522 in the first virtual machine 520 in the system 500b of FIG. 6 may further comprise a GNSS server for GPS information input and output, a Bluetooth server for Bluetooth input and output, a Wi-Fi server for Wi-Fi input and output, and a camera server for camera data input and output.

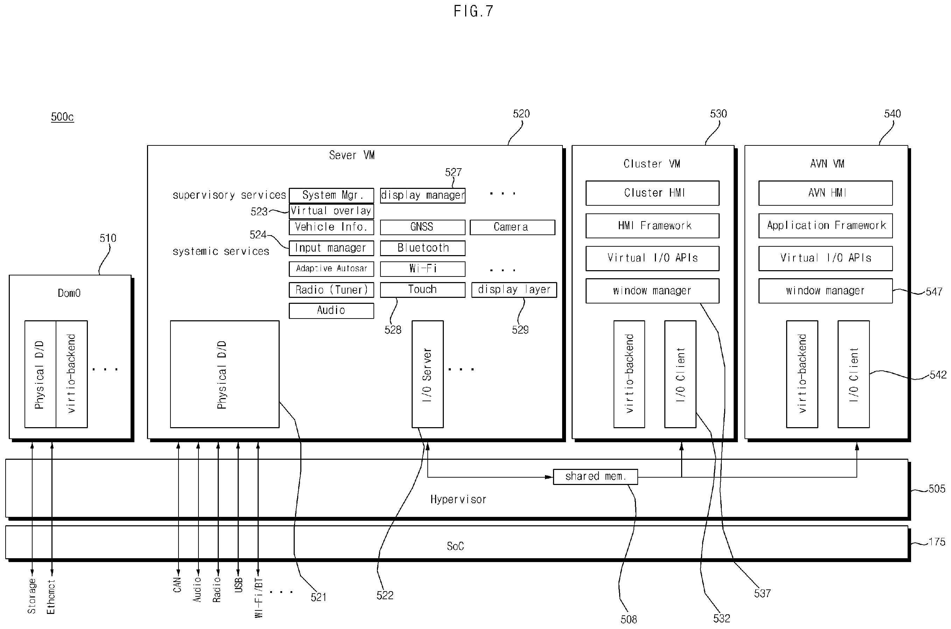

FIG. 7 is a view showing a further example of the system driven in the signal processing device according to the present disclosure.

Referring to the figure, the system 500c driven by the processor 175 in the signal processing device of FIG. 7 is similar to the system 500b of FIG. 6.

That is, like FIG. 6, the processor 175 of FIG. 7 executes the first to third virtual machines 520 to 540 on the hypervisor 505 in the processor 175.

In FIG. 7, however, the display layer server 529 and the touch server 528 may be provided and executed in the first virtual machine 520 outside the input and output server interface 522, unlike FIG. 6.

In addition, the GNSS server for GPS information input and output, the Bluetooth server for Bluetooth input and output, the Wi-Fi server for Wi-Fi input and output, and the camera server for camera data input and output may be provided and executed in the first virtual machine 520 outside the input and output server interface 522, unlike FIG. 6.

That is, the display manager 527, the display layer server 529, the virtual overlay generator 523, the input manager 524, and the touch server 528 may be provided and executed in the first virtual machine 520.

The operation of the display manager 527, the display layer server 529, the virtual overlay generator 523, the input manager 524, and the touch server 528 is the same to FIG. 5, and therefore a description thereof will be omitted.

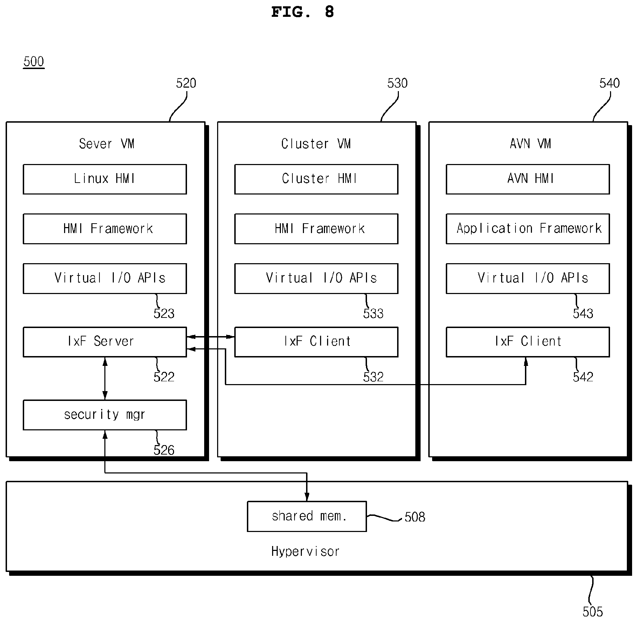

FIGS. 8 to 9B are views referred to in the description of FIG. 5.

First, FIG. 8 illustrates that the first to third virtual machines 520 to 540 are executed on the hypervisor 505 in the processor 175 of the system 500 according to the present disclosure and that the first virtual machine 520 in the processor 175 is configured to set the shared memory 508 based on the hypervisor 505 to transmit the same data to the second virtual machine 530 and the third virtual machine 540.

Consequently, the first display 180a and the second display 180b in the vehicle may be configured to display the same images in a synchronized state.

Meanwhile, high-speed data communication may be performed between the plurality of virtual machines. Furthermore, high-speed data communication may be performed even though the plurality of virtual machines is driven by different operating systems.

Meanwhile, the first virtual machine 520 in the processor 175 may not allocate memories corresponding in number to the virtual machines but may use a single shared memory 508, not memory allocation in response to transmitting the data processed by the first virtual machine 520 to another virtual machine. Consequently, 1:N data communication using the shared memory 508, not 1:1 data communication, may be performed between the virtual machines.

Meanwhile, the first virtual machine 520 in the processor 175 may comprise an input and output server interface 522 and a security manager 526.

Meanwhile, the second virtual machine 530 and the third virtual machine 540 may comprise input and output client interfaces 532 and 542, respectively. Consequently, high-speed data communication between the plurality of virtual machines may be performed using the input and output server interface 522 and the input and output client interfaces 532 and 542.

The input and output server interface 522 in the first virtual machine 520 may be configured to receive requests for transmission of the same data from the input and output client interfaces 532 and 542 in the second virtual machine 530 and the third virtual machine 540, and may be configured to transmit shared data to the shared memory 508 through the security manager 526 based thereon.

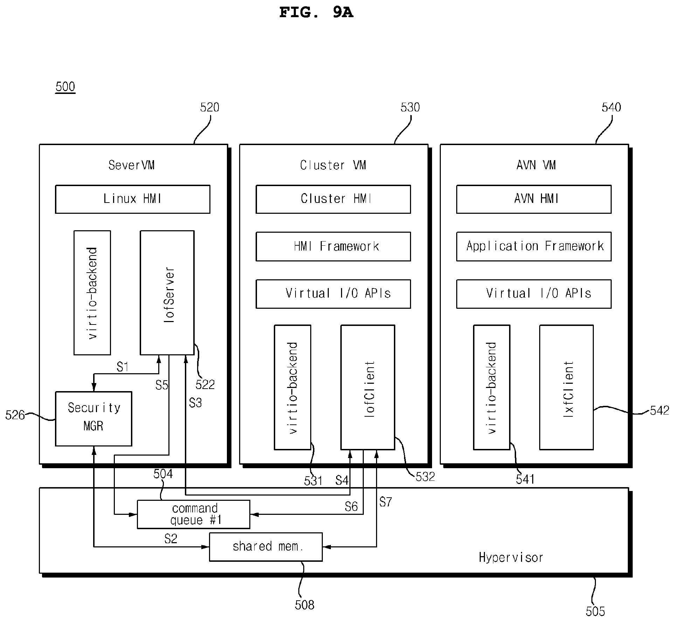

FIG. 9A is a view illustrating transmission of shared data in more detail.

Referring to the figure, to transmit shared data, the input and output server interface 522 in the first virtual machine 520 transmits a request for allocation of the shared memory 508 to the security manager 526 (S1).

Subsequently, the security manager 526 may allocate the shared memory 508 using the hypervisor 505 (S2), and may write shared data in the shared memory 508.

Meanwhile, the input and output client interfaces 532 and 542 may be configured to transmit a request for connection to the input and output server interface 522 after allocation of the shared memory 508 (S3).

Meanwhile, the input and output server interface 522 transmits information regarding the shared memory 508 including key data to the input and output client interfaces 532 and 542 after allocation of the shared memory 508 (S4). At this time, the key data may be private key data.

Meanwhile, the first virtual machine 520 in the processor 175 may be configured to transmit information regarding the shared memory 508 to the second virtual machine 530 and the third virtual machine 540 after setting of the shared memory 508.

Subsequently, the input and output server interface 522 in the first virtual machine 520 is configured to generate a command or a command queue for event processing, other than data, to control distributed processing between the virtual machines (S5).

The figure illustrates that a command queue is generated in a command queue buffer 504 in the hypervisor 505 under control of the input and output server interface 522. However, the present disclosure is not limited thereto, and the command queue may be generated in the first virtual machine 520, not the hypervisor 505, under control of the input and output server interface 522.

Subsequently, the input and output client interfaces 532 and 542 access the command queue buffer 504 to receive the generated command queue or information regarding the command queue (S6).

For example, in response to the commands transmitted to the input and output client interfaces 532 and 542 being the same, the generated command queues may be the same.

As another example, in response to the commands transmitted to the input and output client interfaces 532 and 542 being different from each other, different command queues may be transmitted to the input and output client interfaces 532 and 542.

Subsequently, the input and output client interfaces 532 and 542 may access the shared memory 508 based on the received key data (S5), and may copy or read the shared data from the shared memory 508 (S7).

Particularly, when the input and output client interfaces 532 and 542 receive the same shared data, the input and output client interfaces 532 and 542 may access the shared memory 508 based on the same command queues and the same key data (S5), and may copy or read the shared data from the shared memory 508.

Consequently, the second virtual machine 530 and the third virtual machine 540 may access the shared memory 508, and may eventually share the shared data.

For example, in the case in which the shared data are image data, the second virtual machine 530 and the third virtual machine 540 may share the image data, and eventually the plurality of displays 180a and 180b in the vehicle may be configured to display the same shared images in a synchronized state.

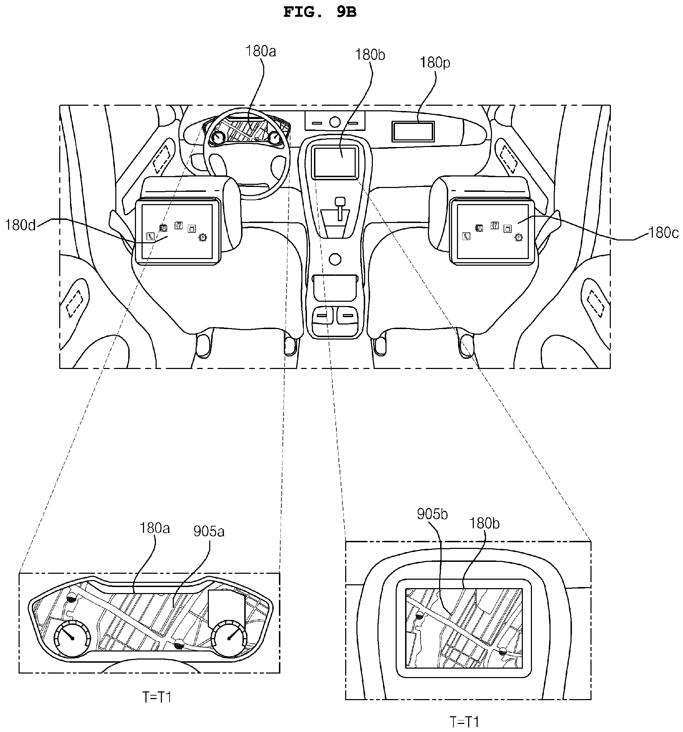

FIG. 9B illustrates that, by the system 500 of FIG. 9A, the second virtual machine 530 displays image data received through the shared memory 508 on the first display 180a, and the third virtual machine 540 displays image data received through the shared memory 508 on the second display 180b.

FIG. 9B illustrates that an image 905a displayed on the first display 180a and an image 905b displayed on the second display 180b are synchronized, whereby the same images 905a and 905b are displayed at the time of T1.

That is, image data processed by the first virtual machine 520 in the processor 175 are transmitted to the second virtual machine 530 and the third virtual machine 540 through the shared memory 508, and the first image 905a displayed on the first display 180a and the second image 905b displayed on the second display 180b based on the image data may be the same. Consequently, the plurality of displays 180a and 180b in the vehicle may be configured to display the same images in a synchronized state.

Meanwhile, the signal processing device 170 may monitor the resource use ratio of each virtual machine and the like, and may efficiently divide the resources. This will be described with reference to FIG. 10.

FIG. 10 is a view showing an example of a system driven in a signal processing device according to an embodiment of the present disclosure.

Referring to the figure, the signal processing device 170 driving the system 500m according to the embodiment of the present disclosure comprises a processor 175 that performs signal processing for a display mounted in a vehicle.

The display mounted in the vehicle may comprise a cluster display 180a and an AVN display 180b, as shown in FIG. 1B.

The display mounted in the vehicle may further comprise a co-driver display 180P or RSE displays 180c and 180d.

The processor 175 according to the embodiment of the present disclosure may comprise a central processor 175a1 and a graphics processor 175a2, as shown in the figure.

The processor 175 according to the embodiment of the present disclosure may be configured to execute a hypervisor 505, execute a server virtual machine 520 and a plurality of guest virtual machines 530 to 550 on the hypervisor 505, and execute a workload balance server RMo configured to turn off the displays 180a to 180d and 180p or perform frame rate variation or image resolution variation based on workload data received from the plurality of guest virtual machines 530 to 550.

Specifically, the central processor 175a1 in the processor 175 according to the embodiment of the present disclosure executes a hypervisor 505, executes a server virtual machine 520 and a plurality of guest virtual machines 530 to 550 on the hypervisor 505, and executes a workload balance server RMo configured to turn off the displays 180a to 180d and 180p or perform frame rate variation or image resolution variation based on workload data received from the plurality of guest virtual machines 530 to 550.

This operation of the workload balance server RMo enables efficient utilization of the signal processing device 170. In particular, the resources of the plurality of virtual machines 520 to 550 in the hypervisor 505 may be efficiently utilized. In addition, the operation in the signal processing device 170 may be stably performed without pause.

Meanwhile, the signal processing device 170 may further comprise a plurality of memories 140a1 and 140a2 and a high-speed interface HSI for high-speed data transmission in addition to the central processor 175a1 and the graphics processor 175a2.

Meanwhile, some of the plurality of memories 140a1 to 140a4 may be non-volatile memories, and the others may be volatile memories.

Meanwhile, the high-speed interface HSI may support PCIe, CCIX, or CXL.

Meanwhile, the signal processing device 170 may further comprise a neural network processor for neural network processing.

The hypervisor 505 may be executed by the central processor 175A1 in the signal processing device 170, the plurality of virtual machines 520, 530, 540, and 550 may be executed on the hypervisor 505, and a shared memory 508 may be set up for data transmission between the plurality of virtual machines 520, 530, 540, and 550.

Meanwhile, a first virtual machine, which is one of the plurality of virtual machines 520, 530, 540, and 550, may be a server virtual machine 520, and may be configured to execute an input/output server interface 522 for data communication with a guest virtual machine, a position information interface vGNSS for receiving position information, a touch information interface vTouch for receiving touch information, and a camera interface vCamera for receiving camera data.

Accordingly, position information, touch information, and camera data may be received from external devices via the server virtual machine 520, and the other guest virtual machines 530 to 550 may be configured to receive position information, touch information, or camera data via the server virtual machine 520, rather than from the external devices.

The guest virtual machines 530, 540, and 550 may be configured to execute input/output client interfaces 532, 542, and 552 for data communication with the input/output server interface 522 and an application.

Meanwhile, the workload balance server RMo may be executed in the server virtual machine 520, as shown in the figure. Accordingly, the server virtual machine 520 allows the resources of the plurality of virtual machines 520 to 550 to be efficiently utilized.

Meanwhile, the workload balance server RMo may be configured to receive workload data from workload balance clients RMa to RMn executed in the plurality of guest virtual machines 530 to 550, respectively, and the workload balance server RMo may be configured to turn off the displays 180a to 180d and 180p or perform frame rate variation or image resolution variation based on the workload data. Accordingly, the signal processing device 170 may be utilized efficiently.

Meanwhile, the workload balance server RMo may be configured to turn off one of the displays 180a to 180d and 180p corresponding to any one of the plurality of guest virtual machines 530 to 550 when it is determined that the display is not being used based on workload data received from the plurality of guest virtual machines 530 to 550. Accordingly, the signal processing device 170 may be utilized efficiently.

Meanwhile, the workload balance server RMo may be configured to, if the use ratio of the central processor 175a1 of any one of the plurality of guest virtual machines 530 to 550 is below a threshold, and the use ratio of the central processor 175a1 of the other guest virtual machines is equal to or greater than a first tolerance, decrease the use ratio of the processor 175a1 of the other guest virtual machines and increase the use ratio of the processor 175a1 of one guest virtual machine to reach the threshold. Accordingly, the signal processing device 170 may be utilized efficiently. Furthermore, the resources of the plurality of virtual machines 520 to 550 may be efficiently utilized.

Meanwhile, the cartridge device 300 of FIGs. 2 or 3 may be a removable device, firmware or software of which may be easier to update than the signal processing device 170.

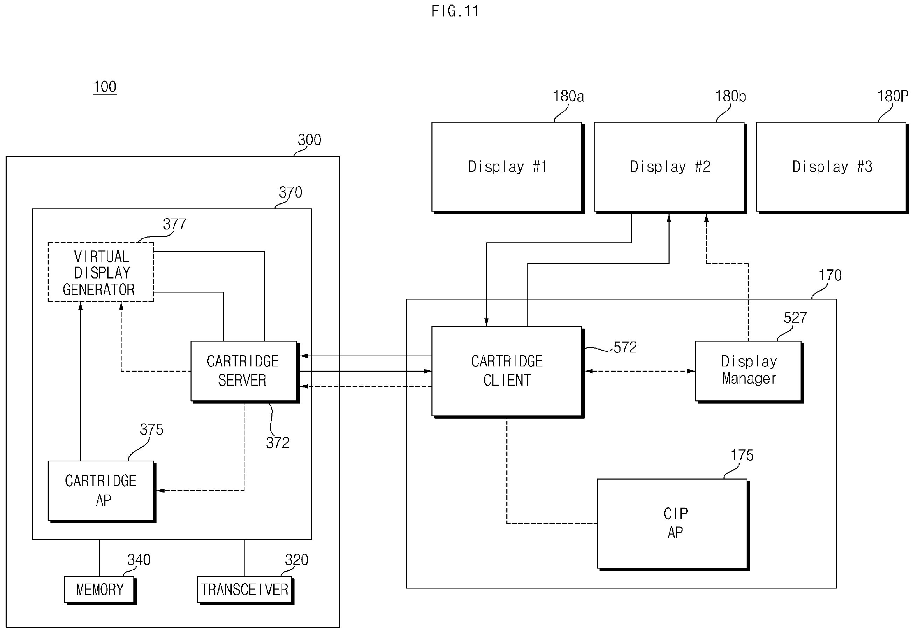

The present disclosure proposes a scheme for providing a cartridge image using the cartridge device 300. This will be described with reference to FIG. 11 and subsequent figures.

FIG. 11 shows an example of a block diagram of a display apparatus for vehicles according to an embodiment of the present disclosure.

Referring to the figure, the display apparatus 100 for vehicles according to the embodiment of the present disclosure comprises a signal processing device 170 that performs signal processing for a plurality of displays 180a, 180b, and 180p mounted in a vehicle and a cartridge device 300 that exchanges data with the signal processing device 170.

Meanwhile, the signal processing device 170 according to the embodiment of the present disclosure may be configured to receive a list of applications installed in the cartridge device 300 when the cartridge device 300 is connected in a wired or wireless fashion.

When a first application is selected from the list of applications installed in the cartridge device 300, the signal processing device 170 may be configured to transmit an execution request of the first application to the cartridge device 300, and may be configured to receive a cartridge image corresponding to the first application from the cartridge device 300 and display the cartridge image. Accordingly, the cartridge image may be displayed.

Meanwhile, the signal processing device 170 may be configured to execute the application based on application execution input.

Meanwhile, upon executing the selected application, the signal processing device 170 may check whether the same application is installed on the cartridge device 300 and, if the same application is installed, check the version of the application.

If the version of the application installed in the cartridge device 300 is newer than the version of the application installed in the signal processing device 170, the signal processing device 170 may be configured to execute the application in the cartridge device 300.

The signal processing device 170 may be configured to receive a cartridge image corresponding to the application from the cartridge device 300.

Accordingly, the signal processing device 170 may be configured to receive the cartridge image and display the cartridge image. In particular, a high-resolution cartridge image may be displayed.

Meanwhile, the signal processing device 170 according to the embodiment of the present disclosure comprises a processor 175 that performs signal processing for the plurality of displays 180a, 180b, and 180p mounted in the vehicle.

Meanwhile, the signal processing device 170 may be configured to execute a cartridge client 572 that exchanges data with the cartridge device 300 and a display manager 527 that manages the plurality of displays 180a, 180b, and 180p.

Meanwhile, the processor 175 may comprise an application processor 175 that transmits a cartridge control command to the cartridge client 572.

Meanwhile, the processor 175 may be configured to transmit at least one piece of display information to display the cartridge image and resolution information to the cartridge device 300.

For example, when the cartridge image is displayed on the second display 180b, which is one of the plurality of displays 180a, 180b, and 180p, the cartridge client 572 in the processor 175 may be configured to transmit information of the second display 180b and resolution information to the cartridge device 300.

As another example, when there is a touch input from the second display 180b, which is one of the plurality of displays 180a, 180b, and 180p, the cartridge client 572 in the processor 175 may be configured to receive the touch input and may be configured to transmit information of the second display 180b and resolution information to the cartridge device 300 based on the touch input.

Meanwhile, the cartridge client 572 in the processor 175 may be configured to receive a cartridge image from the cartridge device 300.

Meanwhile, in response to displaying the cartridge image on the second display 180b, which is one of the plurality of displays 180a, 180b, and 180p, the display manager 527 in the processor 175 may be configured to overlap a cartridge image layer corresponding to the cartridge image and a display image layer corresponding to the display image, and display the cartridge image and the display image together.

Meanwhile, the cartridge device 300 comprises a cartridge server 372 that exchanges data with the signal processing device 170, a virtual display generator 377 for a virtual display, and a processor 375 that performs signal processing for generating a cartridge image. Accordingly, the cartridge image from the cartridge device 300 may be provided.

Meanwhile, the processor 375 may comprise an application processor 375 for generating a cartridge image as a virtual display.

Meanwhile, the cartridge server 372 may be configured to transmit information for controlling the application to the processor 375, and may be configured to transmit information for controlling the virtual display to the virtual display generator 377.

Meanwhile, the cartridge server 372 may be configured to receive a cartridge image generated by the virtual display generator 377, and may be configured to transmit the same to the cartridge client 572 in the signal processing device 170.

Meanwhile, the cartridge device 300 may constitute a screen for at least one of the plurality of displays 180a, 180b, and 180p via the virtual display.

Meanwhile, the virtual display generator 377 in the cartridge device 300 may generate at least one virtual display so as to correspond to the plurality of displays 180a, 180b, and 180p.

For example, the virtual display generator 377 in the cartridge device 300 may generate a virtual display for the second display 180b, which is one of the plurality of displays 180a, 180b, and 180p, in order to display a cartridge image on the second display 180b.

As another example, the virtual display generator 377 in the cartridge device 300 may generate a plurality of virtual displays for the first display 180a and the second display 180b, among the plurality of displays 180a, 180b, and 180p, in order to display cartridge images on the first display 180a and the second display 180b.

As a further example, the virtual display generator 377 in the cartridge device 300 may generate a plurality of virtual displays for the first display 180a, the second display 180b, and the third display 180p, among the plurality of displays 180a, 180b, and 180p, in order to display cartridge images on the first display 180a, the second display 180b, and the third display 180p.

Meanwhile, the cartridge server 372 or the cartridge client 572 may control settings of a cartridge image displayed on at least one of the plurality of displays 180a, 180b, and 180p.

Meanwhile, the cartridge server 372 may capture, encode, and transmit a cartridge image, which is a virtual display screen. This will be described with reference to FIG. 12.

FIGs. 12 to 24 are views referred to in the description of FIG. 11.

FIG. 12 is an example of a detailed internal block diagram of the cartridge server 372 and the cartridge client 572.

Referring to the figure, the cartridge server 372 may comprise an interface 1235 for exchanging data with the cartridge client 572, a cartridge controller 1230 for controlling the cartridge, an application controller 1220 for controlling an application processor 1210, and a virtual display controller 1224 for controlling the virtual display generator 377, a reader 1216 for receiving and capturing a cartridge image generated by the virtual display generator 377, an encoder 1226 for encoding the captured cartridge image, and a streaming server 1234 for streaming the cartridge image from the encoder 1226.

Meanwhile, the cartridge client 572 may comprise a cartridge client player 582 and a cartridge client controller 572a.

The cartridge client player 582 may comprise an interface 1245 for exchanging data with the cartridge server 372, a streaming client 1266 for processing streaming data of the cartridge image received via the interface 1245, a decoder 1264 for decoding the cartridge image from the streaming client 1226, and a player 1262 for playing the cartridge image from the decoder 1264.

Meanwhile, referring to FIG. 12, the signal processing device 170 may comprise a surface processor 1278 for processing the service of the cartridge image from the player 1262, an overlay processor 523 for processing an overlay of the cartridge image from the surface processor 1278, a touch input processor 528 for processing touch input from at least one of the plurality of displays 180a, 180b, and 180p, a gesture processor 1272 for processing an operation gesture based on the touch input, an application manager 1274 for managing application execution based on a signal from the gesture processor 1272, a cartridge remote controller 1268 for remote control of the cartridge, a window manager 1276 for layer management, and a display manager 527 for overlay control.

Meanwhile, the cartridge client controller 572a may comprise a cartridge remote controller 1268 and an interface 1255.

For example, upon receiving touch input from the second display 180b, which is one of the plurality of displays 180a, 180b, and 180p, the touch input processor 528 processes the touch input from the second display 180b.

The gesture processor 1272 recognizes a gesture based on the touch input from the touch input processor 528 and transmits the recognized result to the application manager 1274.

If the input is an execution input for a first display application installed in the cartridge device 300 based on the result information received from the gesture processor 1272, the application manager 1274 may output a signal for controlling the cartridge device 300 to execute the application.

Accordingly, the cartridge remote controller 1268 may be configured to receive a signal from the application manager 1274 and transmit a signal for execution of the first display application the cartridge server 370 via the interface 1255.

The signal processing device 170 may be configured to receive a cartridge image corresponding to the application from the cartridge device 300.

Meanwhile, the cartridge client 572 in the signal processing device 170 may be configured to receive a cartridge image corresponding to the execution of the first display application from the cartridge server 370.

The cartridge surface processor 1278 in the signal processing device 170 may perform surface processing of the cartridge image, and the overlay processor 523 may perform overlay processing to display the cartridge image on the second display 180b. Accordingly, the cartridge image may be displayed.

Meanwhile, if the input is an execution input for the first display application based on the result information received from the gesture processor 1272, the application manager 1274 may determine whether the same application is installed in the cartridge device 300 and the signal processing device 170.

Specifically, the application manager 1274 may determine whether the same application is installed in the cartridge device 300 and the signal processing device 170, and if the same application is installed, check the version of the application.

If the version of the first display application installed in the cartridge device 300 is newer than the version of the first display application installed in the signal processing device 170, the application manager 1274 may output a signal to control the cartridge device 300 to execute the application.

Accordingly, the cartridge remote controller 1268 may be configured to receive the signal from the application manager 1274 and transmit a signal to execute the first display application to the cartridge server 370 via the interface 1255.

The signal processing device 170 may be configured to receive a cartridge image corresponding to the application from the cartridge device 300.

Meanwhile, the cartridge client 572 in the signal processing device 170 may be configured to receive a cartridge image corresponding to the execution of the first display application from the cartridge server 370.

The cartridge surface processor 1278 in the signal processing device 170 may perform surface processing of the cartridge image, and the overlay processor 523 may perform overlay processing to display the cartridge image on the second display 180b. Accordingly, a high-resolution cartridge image may be displayed.

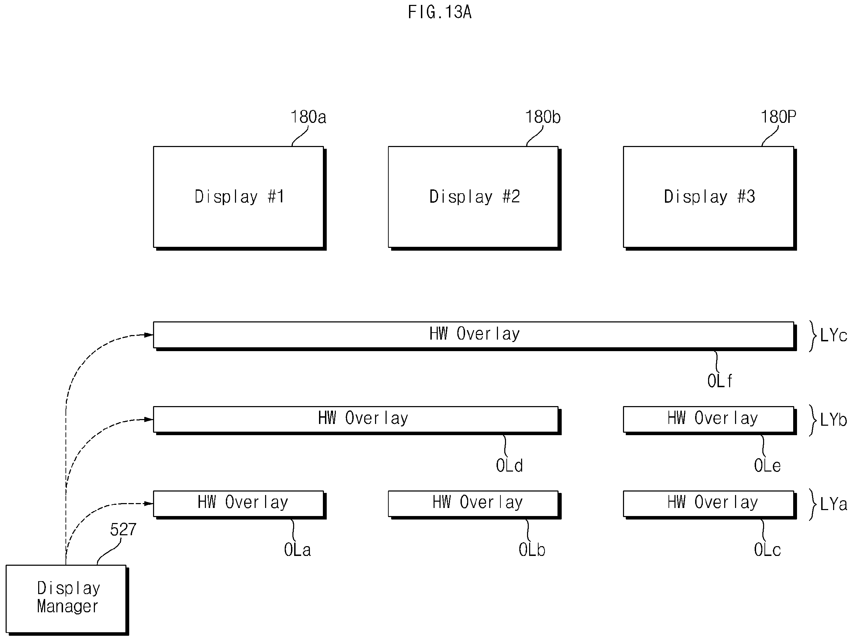

FIG. 13A is a view showing an example in which an image is displayed on each of the first to third displays 180a, 180b, and 180p.

Referring to the figure, the display manager 527 in the signal processing device 170 may control an overlay for displaying images on the first to third displays 180a, 180b, and 180p.

For example, the third guest virtual machine 550 may generate first to third overlays OLa, OLb, and OLc corresponding to a first layer Lya.

The second guest virtual machine 540 may generate fourth and fifth overlays Old and OLe corresponding to a second layer Lyb, and the first guest virtual machine 530 may generate a sixth overlay OLf corresponding to a third layer Lyc.

Accordingly, the first display 180a may display the first overlay OLa, the fourth overlay OLd, and the sixth overlay OLf superimposed.

The second display 180b may display the second overlay OLb, the fourth overlay OLd, and the sixth overlay OLf superimposed, and the third display 180p may display the third overlay OLc, the fifth overlay OLe, and the sixth overlay OLf superimposed.

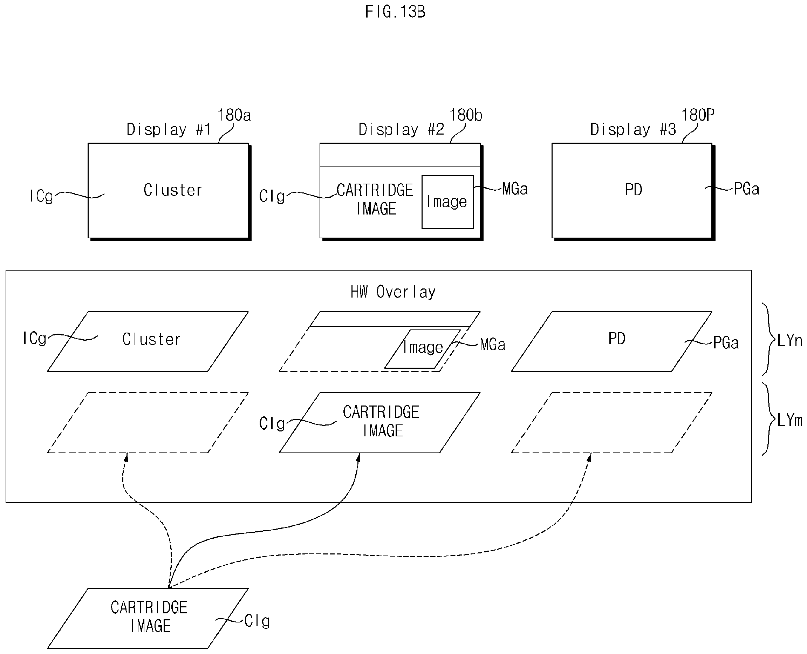

Meanwhile, at least some of the plurality of guest virtual machines 530 to 550 in the signal processing device 170 may be configured to receive a cartridge image of an application executed in the cartridge device 300, and display the received cartridge image on at least one display. This will be described with reference to FIG. 13 and subsequent figures.

FIG. 13B illustrates that a cartridge image is displayed on some of the first to third displays 180a, 180b, and 180p.

Referring to the figure, in response to touch input from the second display 180b, which is one of the plurality of displays 180a, 180b, and 180p, is received, the second guest virtual machine 540, which is one of the plurality of guest virtual machines 530 to 550, may be configured to execute an application, and the server virtual machine 520 may be configured to transmit a request to execute the application to the cartridge device 300.

Meanwhile, the server virtual machine 520 may be configured to transmit information of the second display 180b and the resolution information to the cartridge device 300.

Meanwhile, the processor 175 in the signal processing device 170 may be configured to receive a cartridge image CIg of an application executed in cartridge device 300, and may be configured to display the received cartridge image CIg on the second display 180b.

Specifically, the processor 175 in the signal processing device 170 may be configured to, when the cartridge image CIg is displayed on the second display 180b, among the plurality of displays 180a, 180b, and 180p, superimpose a cartridge image layer Lym corresponding to the cartridge image CIg and a display image layer Lyn corresponding to the display image MGa, and display the cartridge image CIg and the display image MGa together. Accordingly, the cartridge image CIg from the cartridge device 300 may be provided.

For example, the display manager 527 in the signal processing device 170 may be configured to superimpose and display the cartridge image CIg corresponding to the cartridge layer Lym and display images ICg, MGa, and PGa for the first to third displays 180a, 180b, and 180p, corresponding to the display image layer Lyn.

The figure illustrates that the first display 180a displays the first display image ICg, the second display 180b displays the cartridge image CIg and the second display image MGa superimposed, and the third display 180p displays the third display image PGa. Accordingly, it is possible to display each display image and some cartridge images.

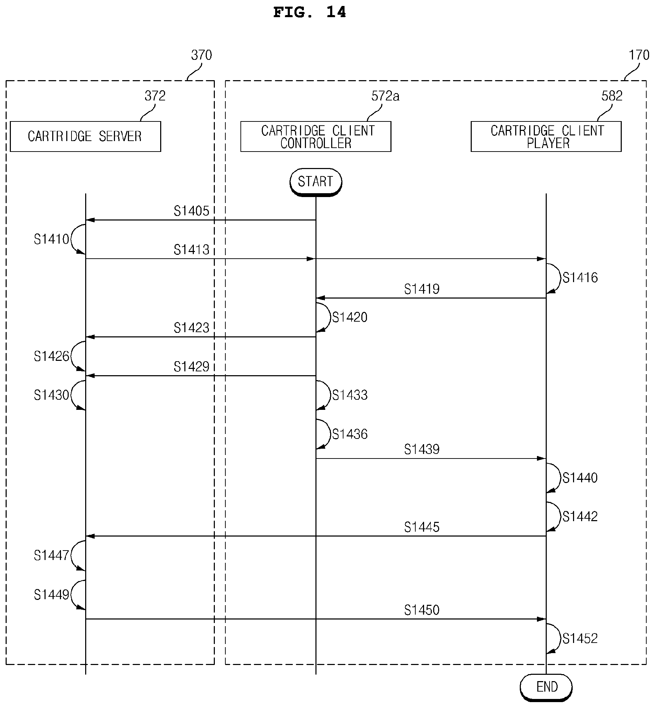

FIG. 14 is a view showing an example of transmitting a cartridge image.

Referring to the figure, the cartridge client controller 572a in the signal processing device 170 may, transmit vehicle information and cartridge client information to the cartridge server 372 when being connected to the cartridge device 370 (S1405).

Subsequently, the cartridge server 372 may perform connection to the cartridge client 572 (S1410).

The cartridge server 372 may be configured to transmit a list of supported applications to the cartridge client controller 572a or cartridge client player 582 (S1413). In particular, the cartridge server 372 may be configured to transmit names, categories, icon images, etc. of the supported applications.

Subsequently, the cartridge client player 582 may display the list of supported applications in the cartridge device 370 (S1416).

Meanwhile, in response to input to execute a first application in the list of supported applications is received by touch input, the cartridge client player 582 may request the cartridge client controller 572a to execute the cartridge and the first application (S1419).

Accordingly, the cartridge client controller 572a may select a display to display the cartridge image, and may determine the screen size, position, resolution, transmission method, player, etc. of the cartridge image (S1420).

Meanwhile, upon determining the first application to be executed in the cartridge device 300, the cartridge client controller 572a may be configured to transmit screen setting information of the cartridge image to the cartridge server 372 (S1423).

The screen setting information may comprise resolution information and metric information of the cartridge image.

Subsequently, the cartridge server 372 generates a virtual display based on the received screen setting information (S1426).

Meanwhile, the cartridge client controller 572a may be configured to transmit a request to execute the first application to the cartridge server 372 (S1429).

Accordingly, the cartridge server 372 may be configured to execute the first application (S1430).

Meanwhile, the cartridge client controller 572a may set a display overlay (S1433) and select a virtual machine to display (S1436).

The cartridge client controller 572a may set z-order, alpha blending size, and the like when setting the display overlay.

For example, if the virtual machine to display is a second guest virtual machine 540 corresponding to the second display 180b, the cartridge client controller 572a may be configured to transmit information about the cartridge server 372 to the cartridge client player 582 in the second guest virtual machine 540 (S1439).

Subsequently, the cartridge client player 582 in the second guest virtual machine 540 may generate a surface (S1440), and map the surface with a layer (S1442).

The cartridge client player 582 in the second guest virtual machine 540 performs connection to the cartridge server 372 for connection between the player and a renderer (S1445).

In response thereto, the cartridge server 372 completes connection to the cartridge client player 582 in the second guest virtual machine 540 (S1447), and generates a cartridge image based on the virtual display (S1449). At this time, the cartridge server 372 may capture and encode the cartridge image of the executed application.

The cartridge server 372 may then transmit the generated cartridge image to the cartridge client player 582 in the second guest virtual machine 540 (S1450).

In response thereto, the cartridge client player 582 in the second guest virtual machine 540 may decode the received cartridge image and display the same (S1452) .

Accordingly, the cartridge image may be easily displayed. In particular, a high-resolution cartridge image may be displayed on the second display 180b where touch input has been performed.

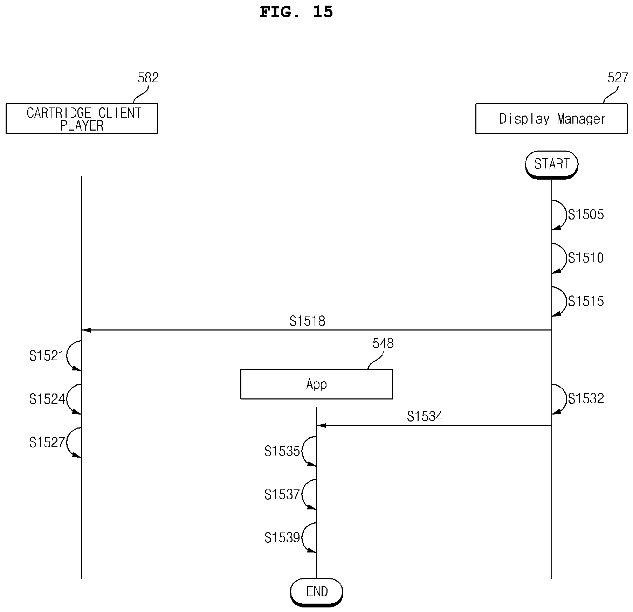

Meanwhile, the cartridge client controller 572a of FIG. 15 may be executed in the server virtual machine 520, and the cartridge client player 582 may be executed in the guest virtual machine, particularly the second guest virtual machine 540.

Meanwhile, in response to touch input from the second display 180b, among the plurality of displays 180a, 180b, and 180p, is received, the second guest virtual machine 540, among the plurality of guest virtual machines 530 to 550, may be configured to execute the application, the server virtual machine 520 may be configured to transmit a request to execute the application to the cartridge device 300, and the second guest virtual machine 540 may be configured to receive a cartridge image of the application executed in the cartridge device 300 and display the received cartridge image on the second display 180b.

Meanwhile, the server virtual machine 520 may be configured to transmit information of the second display 180b and resolution information to the cartridge device 300.

Meanwhile, the server virtual machine 520 may be configured to connect the second guest virtual machine 540 and the cartridge device 300 to each other.

Meanwhile, the server virtual machine 520 may be configured to transmit size information and position information of the cartridge image layer corresponding to the cartridge image to the second guest virtual machine 540. Accordingly, the cartridge image from the cartridge device 300 may be provided.

FIG. 15 is a view showing an example of screen composition of a cartridge image and a display image.

Referring to the figure, the display manager 527 in the signal processing device 170 may be configured to select an overlay to be composited (S1505).

For example, the display manager 527 in the signal processing device 170 may be configured to select a display image overlay and a cartridge image overlay to be composited.

Subsequently, the display manager 527 in the signal processing device 170 may be configured to determine an alpha blending mode and an alpha value (S1510).

Subsequently, the display manager 527 in the signal processing device 170 may be configured to select an overlay or layer of lower z-order (S1515).

The display manager 527 in the signal processing device 170 may be configured to transmit the overlay, layer, position, and size information of a target to be displayed on the screen to the cartridge client player 582.

For example, the display manager 527 in the signal processing device 170 may be configured to transmit the overlay, layer, position, and size information of the cartridge image to the cartridge client player 582.

As another example, the display manager 527 in the signal processing device 170 may be configured to transmit the overlay, layer, position, and size information of the cartridge image and the display image to the cartridge client player 582.

Meanwhile, based on the received information, the cartridge client player 582 may be configured to generate a surface of a specified size (S1521), map the surface with an overlay at a specified position (S1524), and display the cartridge image (S1527).

For example, if the cartridge client player 582 is executed in the second guest virtual machine 540, the cartridge image may be displayed on the second display 180b.

Meanwhile, the display manager 527 in the signal processing device 170 may be configured to set an overlay or layer of higher z-order (S1532).

The display manager 527 in the signal processing device 170 may be configured to transmit the overlay, layer, position, and size information of a target to be displayed on the screen to the first guest virtual machine 530 in which the application 548 is driven (S1534).

For example, the display manager 527 in the signal processing device 170 may be configured to transmit the overlay, layer, position, and size information of the display image to the first guest virtual machine 530 in which the application 548 is driven.

As another example, the display manager 527 in the signal processing device 170 may be configured to transmit the overlay, layer, position, and size information of the cartridge image and the display image to the first guest virtual machine 530 in which the application 548 is driven.

Meanwhile, based on the received information, the first guest virtual machine 530 may be configured to generate a surface of a specified size (S1535), map the surface with an overlay at a specified position (S1537), and display the display image (S1539).

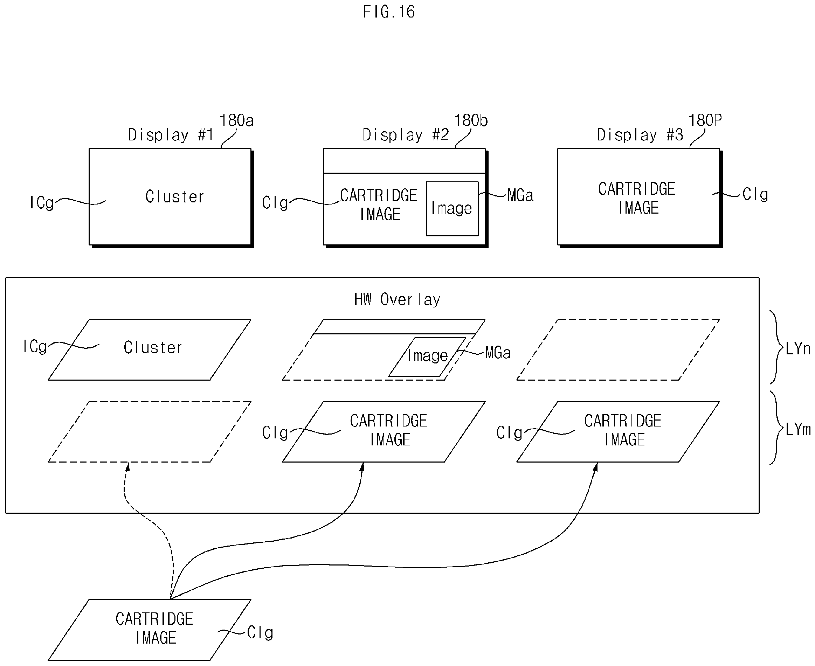

FIG. 16 illustrates a duplicate cartridge image being displayed on a plurality of displays, among the first to third displays 180a, 180b, and 180p.

Referring to the figure, in response to touch input from the second display 180b, among the plurality of displays 180a, 180b, and 180p, is received, the second guest virtual machine 540, among the plurality of guest virtual machines 530 to 550, may be configured to execute an application, and the server virtual machine 520 may be configured to transmit a request to execute the application to the cartridge device 300.

Meanwhile, the server virtual machine 520 may be configured to transmit information of the second display 180b and resolution information to the cartridge device 300.

Meanwhile, the processor 175 in the signal processing device 170 may be configured to receive a cartridge image CIg of an application executed in the cartridge device 300, and may be configured to display the received cartridge image CIg on the second display 180b and the third display 180p.

Specifically, in order to display the cartridge image CIg on the second display 180b, among the plurality of displays 180a, 180b, and 180p, the processor 175 in the signal processing device 170 may superimpose a cartridge image layer Lym corresponding to the cartridge image CIg and a display image layer Lyn corresponding to the display image MGa such that the cartridge image CIg and the display image MGa are displayed together. Accordingly, it is possible to provide the cartridge image CIg from the cartridge device 300.

Meanwhile, in order to display the cartridge image CIg on the third display 180b, among the plurality of displays 180a, 180b, and 180p, the processor 175 in the signal processing device 170 may duplicate the cartridge image CIg such that the cartridge image CIg is displayed on the third display 180p.

The figure illustrates that the first display 180a displays the first display image ICg, the second display 180b displays the cartridge image CIg and the second display image MGa superimposed, and the third display 180p displays the cartridge image CIg. Accordingly, each display image and the cartridge image may be displayed in duplicate.

In order to duplicate the cartridge image, the processor 175 may utilize the shared memory 508.

The processor 175 may be configured to store the cartridge image from the cartridge device 300 in the shared memory 508, and at least some of the plurality of guest virtual machines 530 to 550 may be configured to receive the cartridge image stored in the shared memory 508 and display the received cartridge image on the at least one display. Accordingly, 1:N sharing of the cartridge image using the shared memory 508 may be achieved.

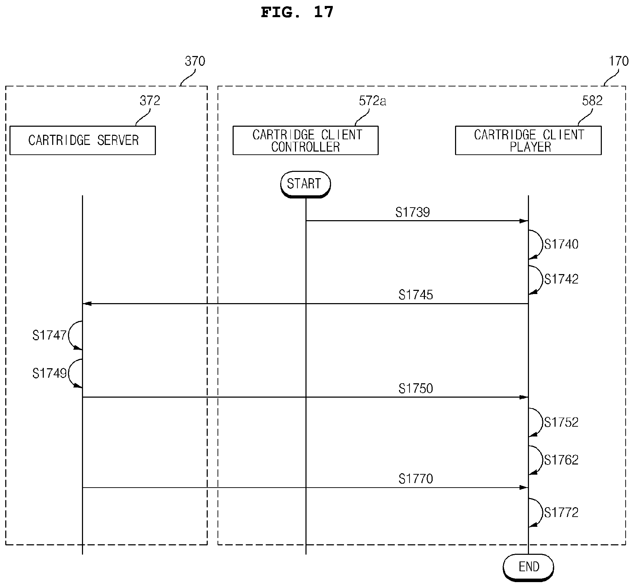

FIG. 17 is a view describing an example of duplication of the cartridge image of FIG. 16.

Referring to the figure, the cartridge client controller 572a in the server virtual machine 520 may be configured to designate a guest virtual machine to be responsible for displaying the cartridge image, and transmit information about the cartridge server 372 to the selected virtual machine (S1739).

For example, if the virtual machine to be displayed is the second guest virtual machine 540 corresponding to the second display 180b, the cartridge client controller 572a in the server virtual machine 520 may be configured to transmit information about the cartridge server 372 to the cartridge client player 582 in the second guest virtual machine 540.

Subsequently, the cartridge client player 582 in the second guest virtual machine 540 may be configured to generate a surface (S1740) and map the surface with a layer (S1742).

Meanwhile, the cartridge server 372 may be configured to support multiple client connection.

Meanwhile, the cartridge client player 582 in the second guest virtual machine 540 be configured to perform connection to the cartridge server 372 for connection between the player and a renderer (S1745).

In response thereto, the cartridge server 372 completes connection to the cartridge client player 582 in the second guest virtual machine 540 (S1747) and generates a cartridge image based on the virtual display (S1749). At this time, the cartridge server 372 may capture and encode the cartridge image of the application that is executed.

The cartridge server 372 may be configured to transmit the generated cartridge image to the cartridge client player 582 in the second guest virtual machine 540 (S1750).

In response thereto, the cartridge client player 582 in the second guest virtual machine 540 may be configured to decode the received cartridge image and display the same on the second display 180b (S1752).

Accordingly, the cartridge image may be easily displayed. In particular, a high-resolution cartridge image may be displayed on the second display 180b where touch input is performed.

Meanwhile, when the second guest virtual machine 540 is in charge of controlling the third display 180p, the cartridge image may also be displayed on the third display 180p, as shown in FIG. 16.

Accordingly, the cartridge client player 582 in the second guest virtual machine 540 may generate a surface for display on the third display 180p, and may map the surface with a layer (S1752).

The cartridge server 372 may then transmit the generated cartridge image to the cartridge client player 582 in the second guest virtual machine 540 (S1770).

In response thereto, the cartridge client player 582 in the second guest virtual machine 540 may decode display the received cartridge image and display the same on the third display 180p (S1772).

Accordingly, the cartridge image may be displayed on the second display 180b and the third display 180p.

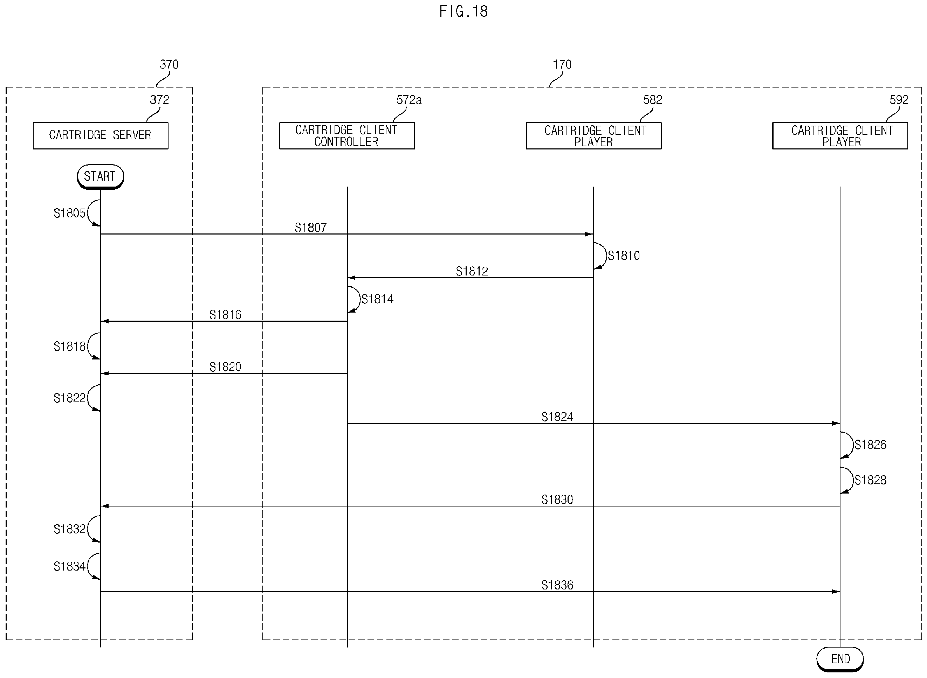

FIG. 18 is a view describing another example of duplication of the cartridge image of FIG. 16.

Referring to the figure, the cartridge server 372 completes connection to the cartridge client player 582 in the second guest virtual machine 540 and generates a cartridge image of the application that is executed based on the virtual display (S1805). At this time, the cartridge server 372 may capture and encode the cartridge image.

The cartridge server 372 may be configured to transmit the generated cartridge image to the cartridge client player 582 in the second guest virtual machine 540 (S1807) .

In response thereto, the cartridge client player 582 in the second guest virtual machine 540 may decode the received cartridge image and display the same on the second display 180b.

Meanwhile, the cartridge client player 582 in the second guest virtual machine 540 may request the cartridge client controller 572a in the server virtual machine 520 to duplicate the cartridge image to a new guest virtual machine (S1812).

Accordingly, the cartridge client controller 572a in the server virtual machine 520 may select a new display for displaying the cartridge image, and may determine the screen size, position, resolution, player, etc. for the cartridge image (S1814).

The cartridge client controller 572a in the server virtual machine 520 may be configured to transmit the screen setting information of the cartridge image to the cartridge server 372 (S1816).

The screen setting information may comprise resolution information and metric information of the cartridge image.

Subsequently, the cartridge server 372 further generates a virtual display based on the received screen setting information (S1818).

Meanwhile, the cartridge client controller 572a may be configured to transmit a request to execute a first application to the cartridge server 372 (S1820).

Accordingly, the cartridge server 372 may be configured to execute the first application (S1822).

Meanwhile, the cartridge client controller 572a may select a virtual machine to display the cartridge image, and may be configured to transmit information about the cartridge server 372 (S1824).

For example, the cartridge client controller 572a in the server virtual machine 520 may select the third display 180p as the display to display the cartridge image, and select the cartridge client player 592 in the third guest virtual machine 550 corresponding to the third display 180p.

Subsequently, the cartridge client player 592 in the third guest virtual machine 550 may generate a surface (S1826) and map the surface with a layer (S1828).

The cartridge client player 592 in the third guest virtual machine 550 performs connection to the cartridge server 372 for connection between the player and the renderer (S1830).

In response thereto, the cartridge server 372 completes connection to the cartridge client player 592 in the third guest virtual machine 550 (S1832) and generates a cartridge image of the application that is executed based on the virtual display (S1834). At this time, the cartridge server 372 may capture and encode the cartridge image.

The cartridge server 372 may then transmit the generated cartridge image to the cartridge client player 592 in the third guest virtual machine 550 (S1836).

In response thereto, the cartridge client player 592 in the third guest virtual machine 550 may decode the received cartridge image and display the same.

Accordingly, the cartridge image may be easily displayed on the second display 180b and the third display 180p.

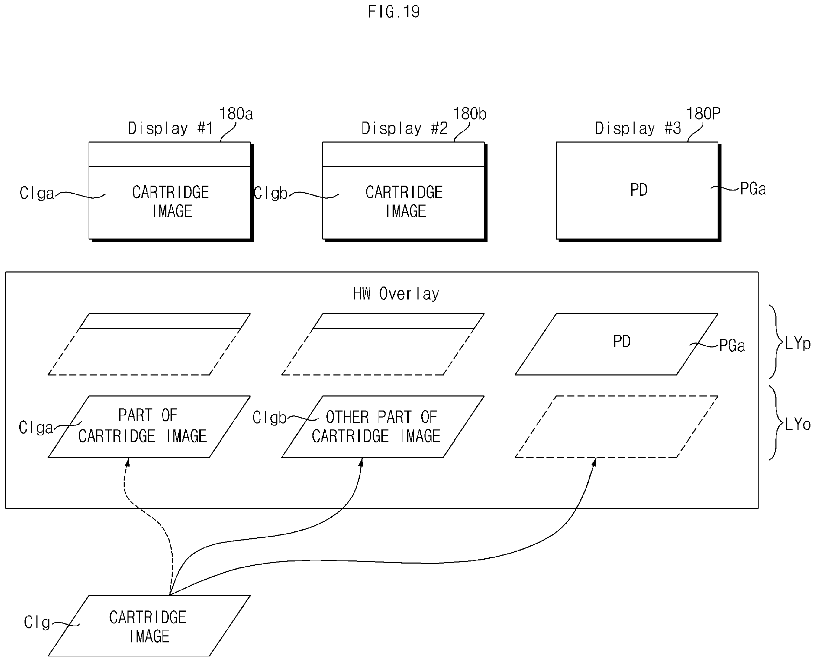

Meanwhile, the processor 175 may be configured to receive the cartridge image from the cartridge device 300, and display a part of the cartridge image on the first display 180a, among the plurality of displays 180a, 180b, and 180p, and display another part of the cartridge image on the second display 180b, among the plurality of displays 180a, 180b, and 180p. This will be described with reference to FIG. 19.

FIG. 19 illustrates that display a part of the cartridge image on the first display 180a and display another part of the cartridge image on the second display 180b.

Referring to the figure, in order to display the cartridge image CIg on the first display 180a and the second display 180b, among the plurality of displays 180a, 180b, and 180p, the processor 175 in the signal processing device 170 may be configured to display the cartridge image CIg using a cartridge image layer Lyo corresponding to the cartridge image CIg.

In particular, the processor 175 in the signal processing device 170 may be configured to display a part CIGa of the cartridge image CIg on the first display 180a and another part CIGb of the cartridge image CIg is displayed on the second display 180b.

Meanwhile, the processor 175 in the signal processing device 170 may be configured to display the display image PGa on the third display 180p using a display image layer Lyp.

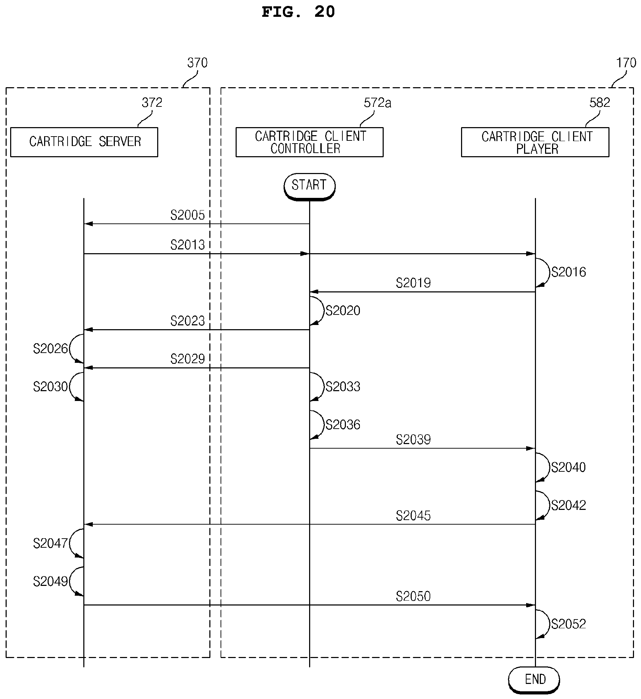

FIG. 20 is a view referred to for split display of the cartridge image of FIG. 19.

Referring to the figure, the cartridge client controller 572a in the signal processing device 170 may be configured to transmit vehicle information and cartridge client information to the cartridge server 372 when connected to the cartridge device 370 (S2005).

Subsequently, the cartridge server 372 may perform connection to the cartridge client 572.

The cartridge server 372 may be configured to transmit a list of supported applications to the cartridge client controller 572a or the cartridge client player 582 (S2013). In particular, the cartridge server 372 may be configured to transmit names, categories, icon images, etc. of the supported applications.

Subsequently, the cartridge client player 582 may display the list of supported applications in the cartridge device 370 (S2016).

Meanwhile, in response to input to execute a first application in the list of supported applications is received by touch input, the cartridge client player 582 may request the cartridge client controller 572a to execute the cartridge and the first application (S2019).

At this time, the cartridge client player 582 may further transmit selection information of two displays to the cartridge client controller 572a.

Accordingly, the cartridge client controller 572a may select two displays to display the cartridge image, and may determine the screen size, position, resolution, transmission method, player, etc. of the cartridge image (S2020).

Meanwhile, upon determining the first application to be executed in the cartridge device 300, the cartridge client controller 572a may be configured to transmit screen setting information of the cartridge image to the cartridge server 372 (S2023).

The screen setting information may comprise resolution information and metric information of the cartridge image.

Subsequently, the cartridge server 372 generates a virtual display based on the received screen setting information (S2026).

Meanwhile, the cartridge client controller 572a may be configured to transmit a request to execute the first application to the cartridge server 372 (S2029).

Accordingly, the cartridge server 372 may be configured to execute the first application (S2030).

Meanwhile, the cartridge client controller 572a may set a display overlay (S2033) and select a virtual machine to display (S2036).

The cartridge client controller 572a may set the z-order, alpha blending size, and the like when setting the display overlay.

For example, if the virtual machine to display is the first guest virtual machine 530 corresponding to the first display 180a, the cartridge client controller 572a may be configured to transmit information about the cartridge server 372 to the cartridge client player 582 in the first guest virtual machine 530 (S2039).

Subsequently, the cartridge client player 582 in the first guest virtual machine 530 can generate a surface (S2040) and map the surface with a layer (S2042).

The cartridge client player 582 in the first guest virtual machine 530 performs connection to the cartridge server 372 for connection between the player and the renderer (S2045).

In response thereto, the cartridge server 372 completes connection to the cartridge client player 582 in the second guest virtual machine 540 (S2047) and generates a cartridge image of the application that is executed based on the virtual display (S2049). At this time, the cartridge server 372 may capture and encode the cartridge image.

The cartridge server 372 may be configured to transmit the generated cartridge image to the cartridge client player 582 in the first guest virtual machine 530 (S2050) .

In response thereto, the cartridge client player 582 in the first guest virtual machine 530 may decode the received cartridge image, and may display a part of the cartridge image on the first display 180a and another part of the cartridge image on the second display 180b (S2052).

Accordingly, it is possible to easily display a large-sized cartridge image. In particular, a high-resolution cartridge image may be displayed on the plurality of displays.

Meanwhile, the processor 175 may be configured to receive the cartridge image from the cartridge device 300, and display a cartridge image of a first size on the first display 180a and display a cartridge image of a second size different from the first size on the second display 180b. Accordingly, the cartridge image from the cartridge device 300 may be provided.

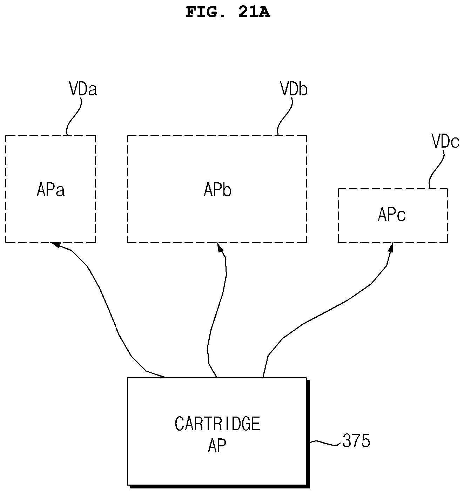

Meanwhile, the processor 175 may be configured to receive a plurality of cartridge images from the cartridge device 300, and may be configured to display the cartridge images on the plurality of displays 180a, 180b, and 180p, respectively. Accordingly, the cartridge images from the cartridge device 300 may be provided. This will be described with reference to FIG. 21A.

FIG. 21A illustrates that the processor 375 in the cartridge device 300 generates and outputs cartridge images VDa, VDb, and VDc of different sizes.

Referring to the figure, the processor 175 may be configured to receive the plurality of cartridge images VDa, VDb, and VDc from the cartridge device 300 and control the first to third displays 180a, 180b, and 180p to display the plurality of cartridge images, respectively.

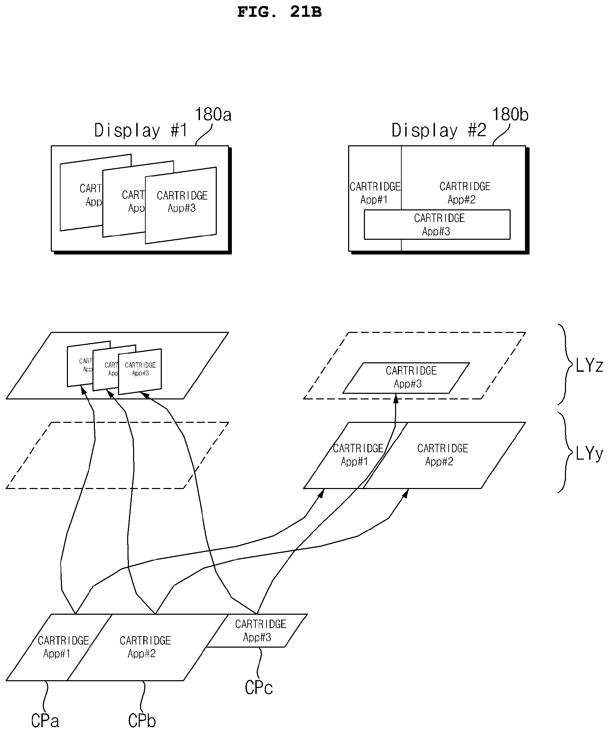

Meanwhile, the processor 175 may be configured to receive a plurality of cartridge images from the cartridge device 300, and display the plurality of cartridge images on at least some of the plurality of displays 180a, 180b, and 180p. This will be described with reference to FIG. 21B.

FIG. 21B illustrates that a plurality of cartridge images CPa, CPb, and CPc is received from the cartridge device 300.

Referring to the figure, the processor 175 may be configured to receive a plurality of cartridge images CPa, CPb, and CPc from the cartridge device 300, and display the plurality of cartridge images CPa, CPb, and CPc on the first display 180a simultaneously.

Meanwhile, the processor 175 may be configured to receive a plurality of cartridge images CPa, CPb, and CPc from the cartridge device 300, separate the layers of the plurality of cartridge images CPa, CPb, and CPc, and display the plurality of cartridge images on the second display 180b in the state in which the first cartridge image CPa and the second cartridge image CPb are disposed as a lower layer LYy and the third cartridge image CPc is disposed as an upper layer LYz.

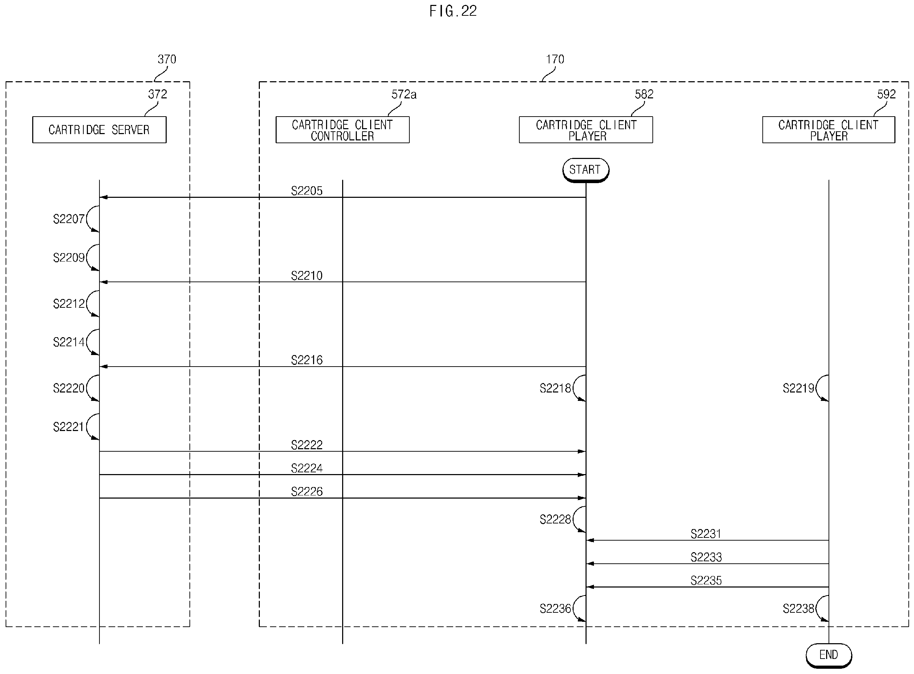

FIG. 22 is a view referred to in the description of FIG. 21A or 21B.

Referring to the figure, the cartridge client player 582 in the first guest virtual machine 530 may be configured to request the cartridge server 372 to execute a first application (S2205).

In response thereto, the cartridge server 372 may be configured to generate a first cartridge image of the first application that is executed (S2207), and encode the same (S2209).

Subsequently, the cartridge client player 582 in the first guest virtual machine 530 may request the cartridge server 372 to execute a second application (S2210).

In response thereto, the cartridge server 372 may be configured to generate a second cartridge image of the second application that is executed (S2212), and encode the same (S2214).

Subsequently, the cartridge client player 582 in the first guest virtual machine 530 may be configured to request the cartridge server 372 to execute a third application (S2216).

In response thereto, the cartridge server 372 may be configured to generate a third cartridge image of the third application that is executed (S2220), and encode the same (S2221).

Meanwhile, the cartridge client player 582 in the first guest virtual machine 530 may be configured to map each of the first and third applications to a layer for the first display 180a (S2218).

Meanwhile, the second cartridge client player 592 in the first guest virtual machine 530 may be configured to map each of the first to third applications to a layer for the first display 180a (S2219).

The cartridge server 372 may be configured to transmit the first cartridge image to the third cartridge image to the cartridge client player 582 in the first guest virtual machine 530 (S2222, S2224, and S2226).

Subsequently, the cartridge client player 582 in the first guest virtual machine 530 may be configured to receive the first cartridge image to the third cartridge image and decode the same (S2228).

The cartridge client player 582 in the first guest virtual machine 530 may be configured to transmit the first cartridge image to the third cartridge image to the second cartridge client player 592 in the first guest virtual machine 530 (S2231, S2233, and S2235).

Meanwhile, the cartridge client player 582 in the first guest virtual machine 530 may be configured to combine and display the first cartridge image to the third cartridge image on the first display 180a (S2236).

Meanwhile, the second cartridge client player 592 in the first guest virtual machine 530 may be configured to combine and display the first cartridge image to the third cartridge image on the second display 180b (S2238) .

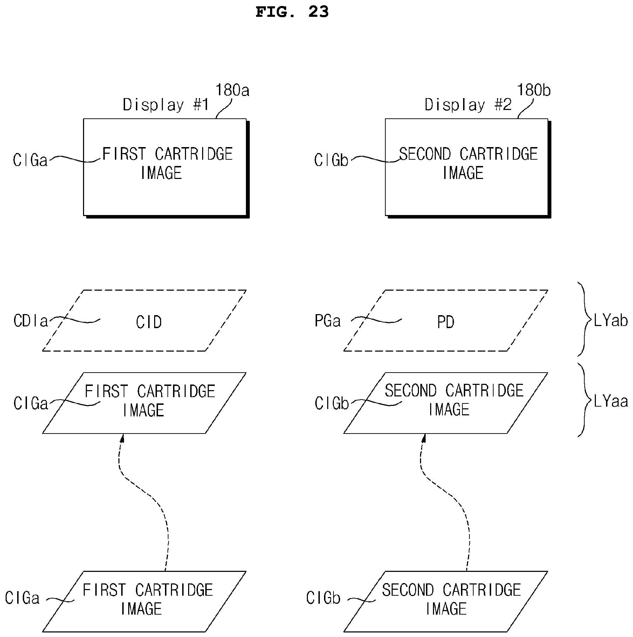

FIG. 23 is a view describing the movement of a cartridge image.

Referring to the figure, the signal processing device 170 may be configured to receive a cartridge image from the cartridge device 300.

In particular, at a first point in time, a first cartridge image CIGa may be received, and at a second point in time, a second cartridge image CIGb may be received.

Accordingly, the signal processing device 170 may be configured to display control the first cartridge image CIGa on the first display 180a, and display the second cartridge image CIGb on the second display 180b.

In this case, the second cartridge image CIGb may be a magnified and shifted version of the first cartridge image CIGa.

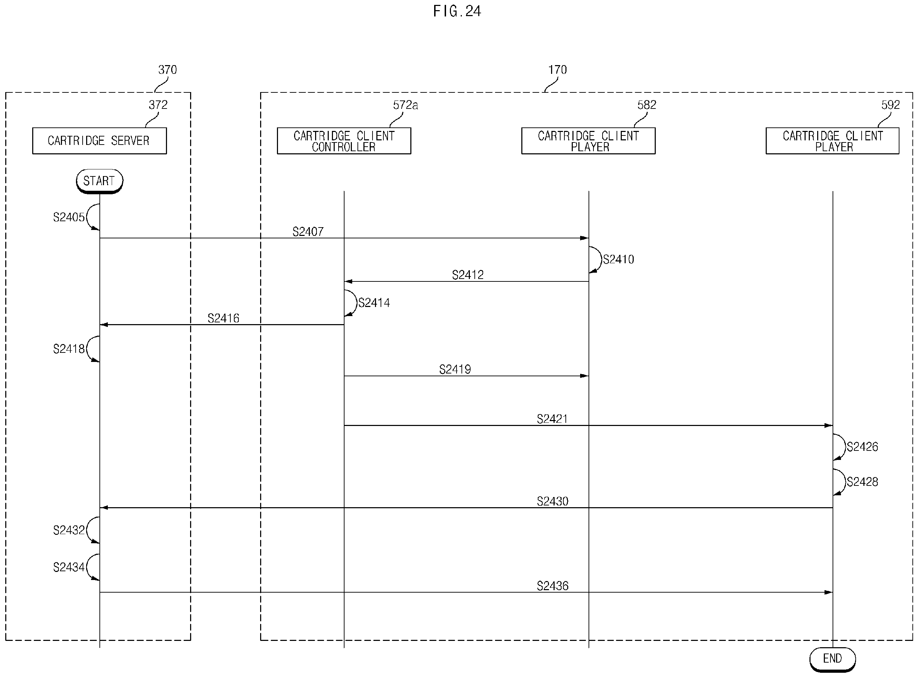

FIG. 24 is a view referred to in the description of FIG. 23.

Referring to the figure, the cartridge server 372 may be configured to generate a cartridge image of an application that is executed (S2405). At this time, the cartridge server 372 may be configured to capture and encode the cartridge image.

Meanwhile, the cartridge server 372 may be configured to then transmit the generated cartridge image to the cartridge client player 582 in the first guest virtual machine 530 (S2407).

In response thereto, the cartridge client player 582 in the first guest virtual machine 530 may be configured to decode the received cartridge image and display the same on the first display 180a (S2410).

Meanwhile, the cartridge client player 582 in the first guest virtual machine 530 may be configured to request a display change to the cartridge client controller 572a in the server virtual machine 520 (S2412).

Accordingly, the cartridge client controller 572a in the server virtual machine 520 may be configured to select a new display for displaying the cartridge image, and determine the screen size, position, resolution, player, etc. for the cartridge image (S2414).

The cartridge client controller 572a in the server virtual machine 520 may be configured to transmit the screen setting information of the cartridge image to the cartridge server 372 (S2416).

The screen setting information may comprise resolution information and metric information of the cartridge image.

Subsequently, the cartridge server 372 be configured to change the settings of the virtual display based on the received screen setting information (S2418).

Meanwhile, the cartridge client controller 572a in the server virtual machine 520 may be configured to request to terminate the display of the cartridge image on the first display 180a (S2419). Accordingly, the display of the cartridge image on the first display 180a may be terminated.

The cartridge client controller 572a in the server virtual machine 520 may be configured to select a display to display the zoomed-in cartridge image and transmit information about the server to the cartridge client player 592 in the second guest virtual machine 540 that controls the selected display (S2421).

The cartridge client player 592 in the second guest virtual machine 540 may be configured to generate a surface (S2426) and map the surface with a layer (S2428) .

The cartridge client player 592 in the second guest virtual machine 540 performs connection to the cartridge server 372 for connection between the player and the renderer (S2430).

In response thereto, the cartridge server 372 completes connection to the cartridge client player 592 in the second guest virtual machine 540 (S2432), and generates a cartridge image of an application that is executed based on the virtual display (S2434). At this time, the cartridge server 372 may capture and encode the cartridge image.

The cartridge server 372 may be configured to transmit the generated cartridge image to the cartridge client player 592 in the second guest virtual machine 540 (S2436) .

In response thereto, the cartridge client player 592 in the second guest virtual machine 540 may decode the received cartridge image and display the same.

Accordingly, the cartridge image may be easily moved from the first display 180a to the second display 180b for display.

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A signal processing device comprising a processor configured to perform signal processing for a plurality of displays mounted in a vehicle,
wherein in response to execution of an application, the processor is configured to transmit a request to execute the application to a cartridge device, receive a cartridge image of the application executed in the cartridge device, and display the received cartridge image on at least one of the plurality of displays.

2. The signal processing device of claim 1, wherein the processor is configured to transmit information of at least one display to display the cartridge image and resolution information to the cartridge device.

3. The signal processing device of claim 1, wherein, in response to displaying the cartridge image on a second display among the plurality of displays, the processor is configured to transmit information of the second display and resolution information to the cartridge device.

4. The signal processing device of claim 1, wherein, in response to displaying the cartridge image on a second display among the plurality of displays, the processor is configured to superimpose a cartridge image layer corresponding to the cartridge image and a display image layer corresponding to the display image, and display the cartridge image and the display image together.

5. The signal processing device of claim 1, wherein the processor is configured to execute a cartridge client configured to exchange data with the cartridge device and a display manager to manage the plurality of displays.

6. The signal processing device of claim 5, wherein the processor comprises an application processor configured to transmit a cartridge control command to the cartridge client.

7. The signal processing device of claim 1, wherein
the processor is configured to execute a server virtual machine and a plurality of guest virtual machines on a hypervisor, and
the plurality of guest virtual machines is operated for the plurality of displays.

8. The signal processing device of claim 7, wherein
in response to touch input from a second display among the plurality of displays,
a second guest virtual machine among the plurality of guest virtual machines is configured to execute the application,
the server virtual machine is configured to transmit a request to execute the application to the cartridge device, and
the second guest virtual machine is configured to receive the cartridge image of the application executed in the cartridge device and display the received cartridge image on the second display.

9. The signal processing device of claim 8, wherein the server virtual machine is configured to transmit information of the second display and resolution information to the cartridge device.

10. The signal processing device of claim 8, wherein the server virtual machine is configured to connect the second guest virtual machine and the cartridge device to each other.

11. The signal processing device of claim 8, wherein the server virtual machine is configured to transmit size information and position information of a cartridge image layer corresponding to the cartridge image to the second guest virtual machine.

12. The signal processing device of claim 7, wherein at least some of the plurality of guest virtual machines is configured to receive the cartridge image of the application executed in the cartridge device and display the received cartridge image on at least one display.

13. The signal processing device of claim 7, wherein
the processor is configured to store the cartridge image from the cartridge device in a shared memory, and
at least some of the plurality of guest virtual machines is configured to receive the cartridge image stored in the shared memory and display the received cartridge image on at least one display.

14. The signal processing device of claim 1, wherein the processor is configured to receive the cartridge image from the cartridge device, display a part of the cartridge image on a first display among the plurality of displays, and display another part of the cartridge image on a second display among the plurality of displays.

15. The signal processing device of claim 1, wherein the processor is configured to receive the cartridge image from the cartridge device, display a cartridge image of a first size on a first display and display a cartridge image of a second size different from the first size on a second display.

16. The signal processing device of claim 1, wherein the processor is configured to receive a plurality of cartridge images from the cartridge device and display the respective cartridge image on the plurality of displays.

17. The signal processing device of claim 1, wherein the processor is configured to receive a plurality of cartridge images from the cartridge device and display the plurality of cartridge images together on at least some of the plurality of displays.

18. A display apparatus for vehicles, the display apparatus comprising the signal processing device of any one of claims 1 to 17.

19. The display apparatus of claim 18, wherein the cartridge device comprises a cartridge server configured to exchange data with the signal processing device and a virtual display generator for a virtual display.
